(19) Europäisches Patentamt
European Patent Office
Office européen des brevets

(11) **EP 4 329 262 A1**

(12) **EUROPEAN PATENT APPLICATION**
published in accordance with Art. 153(4) EPC

(43) Date of publication:
**28.02.2024 Bulletin 2024/09**

(21) Application number: **22806385.5**

(22) Date of filing: **08.04.2022**

(51) International Patent Classification (IPC):
**H04L 47/56** *(2022.01)*

(52) Cooperative Patent Classification (CPC):
**H04L 47/56**

(86) International application number:
**PCT/CN2022/085875**

(87) International publication number:
**WO 2022/237415 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.05.2021 CN 202110528002**

(71) Applicant: **Huawei Technologies Co., Ltd.
Shenzhen, Guangdong 518129 (CN)**

(72) Inventors:
• **REN, Shoushou
Shenzhen, Guangdong 518129 (CN)**

• **MENG, Rui
Shenzhen, Guangdong 518129 (CN)**
• **LIU, Xuan
Shenzhen, Guangdong 518129 (CN)**
• **LIU, Bingyang
Shenzhen, Guangdong 518129 (CN)**
• **WANG, Chuang
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **PACKET FORWARDING METHOD AND RELATED APPARATUS**

(57)    This application provides a packet forwarding method and a related apparatus. The method may include: A first device receives a first packet sent by a second device in a second cycle; and the first device determines a target cycle corresponding to the first packet based on cycle modification information corresponding to the first packet and a cycle mapping relationship, and forwards the first packet in the target cycle corresponding to the first packet. The cycle mapping relationship includes a mapping relationship between a first cycle and a second cycle, and the first cycle represents a forwarding cycle determined based on the cycle mapping relationship. The cycle modification information, that is, information about a cycle modified (or adjusted) relative to the forwarding cycle determined based on the cycle mapping relationship is introduced, to flexibly adjust actual packet forwarding time, so that an end-to-end deterministic latency and jitter can be ensured as much as possible.

FIG. 6

## Description

This application claims priority to Chinese Patent Application 202110528002. 8, filed with the China National Intellectual Property Administration on May 14, 2021 and entitled "PACKET FORWARDING METHOD AND RELATED APPARATUS", which is incorporated herein by reference in its entirety.

## TECHNICAL FIELD

This application relates to the field of communication technologies, and more specifically, to a packet forwarding method and a related apparatus.

## BACKGROUND

In many scenarios such as ultra-reliable low latency communications (ultra-reliable low-latency communication, URLLC), industrial Internet, and a smart factory, there may be a clear requirement on network transmission reliability. It needs to ensure that there is no packet loss in end-to-end transmission of a service at a high probability (for example, 99. 99% or higher) in a network. A common method for ensuring reliability is to avoid a packet loss and service interruption caused by a node or link fault, a line bit error, or the like as much as possible through dual feed and selective receiving (or multi-feed and selective receiving).

How to reduce or even eliminate a latency difference between a plurality of paths as much as possible is an urgent problem to be resolved.

## SUMMARY

This application provides a packet forwarding method and a related apparatus, to flexibly adjust packet forwarding time, and reduce or even eliminate a latency difference between a plurality of paths as much as possible.

According to a first aspect, a packet forwarding method is provided. The method may be performed by a communication device, or may be performed by a chip or a circuit used in the communication device. This is not limited in this application. For ease of description, the following provides descriptions by using an example in which a first device performs the method.

The method may include: The first device receives a first packet from a second device; the first device determines a target cycle corresponding to the first packet based on cycle modification information corresponding to the first packet and a cycle mapping relationship, where the cycle mapping relationship includes a mapping relationship between a first cycle and a second cycle, the first cycle represents a forwarding cycle determined based on the cycle mapping relationship, and the second cycle represents a cycle in which the second device sends the first packet; and the first device forwards the first packet in the target cycle corresponding to the first packet.

The cycle modification information may be understood as information about a cycle modified (or adjusted) relative to the forwarding cycle determined based on the cycle mapping relationship, that is, information about a cycle by which the target cycle is modified (or adjusted) relative to the first cycle.

Based on the technical solution, the target cycle in which the first device actually sends the packet is determined based on both the cycle mapping relationship and the cycle modification information. The cycle modification information, that is, the information about the cycle modified (or adjusted) relative to the forwarding cycle determined based on the cycle mapping relationship is introduced, to flexibly adjust actual packet forwarding time. In this way, because the cycle modification information is considered, packet disorder and data overflow in a cycle can be reduced or even avoided, and an end-to-end deterministic latency and jitter can be ensured as much as possible. In addition, each node (for example, the first device) may calculate the target cycle based on the cycle mapping relationship and the cycle modification information, to reduce a calculation load of calculating a target cycle of each node on a path by a control plane device or a first-hop node, and reduce planning complexity.

With reference to the first aspect, in some implementations of the first aspect, the method further includes: The first device further receives a second packet sent by the second device in the second cycle; and the first device forwards the second packet in a target cycle corresponding to the second packet, where the target cycle corresponding to the second packet is different from the target cycle corresponding to the first packet.

For example, the target cycle corresponding to the first packet is determined based on cycle modification information corresponding to the second packet and the cycle mapping relationship, or the target cycle corresponding to the second packet is determined based on the cycle mapping relationship.

Based on the technical solution, for the first device, because cycle modification information is considered for different packets (for example, the first packet and the second packet) from a same cycle, the different packets may have different actual target cycles.

With reference to the first aspect, in some implementations of the first aspect, the first packet received by the first device from the second device carries the second cycle.

With reference to the first aspect, in some implementations of the first aspect, the first packet received by the first device from the second device carries the second cycle and the cycle modification information corresponding to the first packet.

Based on the technical solution, when sending a packet to a downstream node (for example, the first device), an upstream node (for example, the second device) may further send cycle modification information to the downstream node. The cycle modification information is carried in the packet. After receiving the packet, the downstream node (for example, the first device) reads the cycle modification information carried in the packet, and calculates a target cycle of the packet, so that the packet enters a queue corresponding to the corresponding target cycle and waits to be sent.

With reference to the first aspect, in some implementations of the first aspect, the cycle modification information corresponding to the first packet includes an offset cycle quantity corresponding to the first packet, and the offset cycle quantity corresponding to the first packet is a quantity of cycles by which the target cycle corresponding to the first packet is offset relative to the first cycle.

For example, the offset cycle quantity may be 0, or may be greater than 0.

Based on the technical solution, the target cycle is determined based on both the first cycle and the offset cycle quantity.

With reference to the first aspect, in some implementations of the first aspect, the target cycle corresponding to the first packet is after the first cycle.

Based on the technical solution, the target cycle is delayed by one or more cycles relative to the first cycle.

With reference to the first aspect, in some implementations of the first aspect, the target cycle corresponding to the first packet is determined according to the following formula: $Y=X+\Delta+O$, where Y represents the target cycle corresponding to the first packet, X represents the second cycle, $\Delta$ represents a constant related to the cycle mapping relationship, and O represents an offset cycle difference corresponding to the first packet.

With reference to the first aspect, in some implementations of the first aspect, the cycle modification information corresponding to the first packet is determined based on one or more pieces of the following information: a latency difference between a plurality of paths used to transmit the first packet, a preset range that needs to be satisfied by the latency difference between the plurality of paths used to transmit the first packet, an available resource on the plurality of paths, and a resource available for the first packet in the first cycle.

Based on the technical solution, for an actual sending cycle of a packet on each node (for example, the first device), a latency difference of transmitting the packet on a plurality of paths and/or an available resource of the packet on the plurality of paths, an available resource on the plurality of paths, and the like are comprehensively considered, so that an end-to-end deterministic latency and jitter can be ensured as much as possible.

With reference to the first aspect, in some implementations of the first aspect, the method further includes: The first device locally reads the cycle modification information corresponding to the first packet.

Based on the technical solution, each node (for example, the first device) may pre-store or maintain the cycle modification information. When the cycle modification information needs to be used, each node (for example, the first device) locally reads the cycle modification information, and directly calculates the target cycle of the packet.

With reference to the first aspect, in some implementations of the first aspect, there is a correspondence between one or more flows and cycle modification information, and the one or more flows include a flow in which the first packet is located.

For example, the first device may locally pre-store or maintain the correspondence between one or more flows and cycle modification information.

Based on the technical solution, there may be a correspondence between a flow and cycle offset information, and the first device may store or maintain the correspondence. For example, a flow 1 corresponds to cycle offset information 1, a flow 2 corresponds to cycle offset information 2, and so on. Offset cycle quantities corresponding to different flows may be the same or may be different; or offset cycle quantities corresponding to different flows at each node on a same path may be the same or may be different, or the like. This is not limited.

With reference to the first aspect, in some implementations of the first aspect, there is a correspondence between each device on the plurality of paths used to transmit the first packet and cycle modification information.

For example, the first device may locally pre-store or maintain the correspondence between each device on the plurality of paths used to transmit the first packet and cycle modification information.

Based on the technical solution, there may be a correspondence between each node on a path and cycle offset information, and the first device may store or maintain the correspondence. For example, a node 1 on the path corresponds to the cycle offset information 1, a node 2 on the path corresponds to the cycle offset information 2, and so on.

With reference to the first aspect, in some implementations of the first aspect, the method further includes: The first device receives the cycle modification information corresponding to the first packet.

For example, the first device may receive the cycle modification information from the control plane device, or the first device may receive the cycle modification information from the upstream node (for example, the second device).

With reference to the first aspect, in some implementations of the first aspect, the cycle modification information corresponding to the first packet includes: cycle modification information corresponding to the first packet on the first device, or cycle modification information corresponding to the first packet on the first device and one or more downstream devices of the first device; and that the first device determines a target cycle corresponding to the first packet based on cycle modification information corresponding to the first packet and a cycle mapping relationship includes: The first device determines the target cycle corresponding to the first packet based on the cycle modification information corresponding to the first packet on the first device and the cycle mapping relationship.

For example, when forwarding the first packet in the target cycle corresponding to the first packet, the first device may send cycle modification information corresponding to the first packet on the one or more downstream devices of the first device together, for example, use the packet to carry the cycle modification information.

Based on the technical solution, when sending a packet to the downstream node (for example, the first device), the upstream node (for example, the second device) may further send cycle modification information of one or more nodes to the downstream node. The cycle modification information is carried in the packet. After receiving the packet, the downstream node (for example, the first device) identifies cycle modification information corresponding to the downstream node, and calculates a target cycle of the packet, so that the packet enters a queue corresponding to the corresponding target cycle and waits to be sent.

According to a second aspect, a packet forwarding method is provided. The method may be performed by a communication device, or may be performed by a chip or a circuit used in the communication device. This is not limited in this application. For ease of description, the following provides descriptions by using an example in which a target device performs the method.

The method may include: The target device obtains cycle modification information corresponding to a first packet, where the cycle modification information corresponding to the first packet is used to determine a target cycle corresponding to the first packet together with a cycle mapping relationship, where the target cycle corresponding to the first packet is a cycle in which a first device forwards the first packet, the cycle mapping relationship represents a mapping relationship between a first cycle and a second cycle, the second cycle represents a cycle in which a second device sends the first packet to the first device, and the first cycle represents a forwarding cycle determined based on the cycle mapping relationship; and the target device sends the cycle modification information corresponding to the first packet.

For example, the target device may be, for example, a control plane node; or may be a first-hop node (that is, a network ingress node); or may be a second device.

With reference to the second aspect, in some implementations of the second aspect, the method further includes: The target device obtains cycle modification information corresponding to a second packet, where the cycle modification information corresponding to the second packet is different from the cycle modification information corresponding to the first packet, and both the second packet and the first packet are packets sent by the second device to the first device in the second cycle.

With reference to the second aspect, in some implementations of the second aspect, the cycle modification information corresponding to the first packet includes an offset cycle quantity corresponding to the first packet, and the offset cycle quantity corresponding to the first packet is a quantity of cycles by which the target cycle corresponding to the first packet is offset relative to the first cycle.

With reference to the second aspect, in some implementations of the second aspect, the target cycle corresponding to the first packet is after the first cycle.

With reference to the second aspect, in some implementations of the second aspect, that the target device obtains cycle modification information corresponding to a first packet includes: The target device determines the cycle modification information corresponding to the first packet based on one or more pieces of the following information: a latency difference between a plurality of paths used to transmit the first packet, a preset range that needs to be satisfied by the latency difference between the plurality of paths used to transmit the first packet, an available resource on the plurality of paths, and a resource available for the first packet in the first cycle.

With reference to the second aspect, in some implementations of the second aspect, the target device is the second device, and the method further includes: The second device sends the first packet to the first device, where the first packet carries the second cycle, or the first packet carries the second cycle and the cycle modification information corresponding to the first packet.

With reference to the second aspect, in some implementations of the second aspect, the cycle modification information corresponding to the first packet includes: cycle modification information corresponding to the first packet on the first device, or cycle modification information corresponding to the first packet on the first device and one or more downstream devices of the first device.

With reference to the second aspect, in some implementations of the second aspect, the target device is a control plane device, and that the target device sends the cycle modification information corresponding to the first packet includes: The control plane device sends the cycle modification information corresponding to the first packet to the first device.

According to a third aspect, an embodiment of this application provides a packet forwarding apparatus. The apparatus is configured to perform the method according to the first aspect or the second aspect. Specifically, the apparatus may include units and/or modules configured to perform the method according to the first aspect or the second aspect, for example, a processing unit and/or a communication unit.

In an implementation, the apparatus is a communication device. When the apparatus is a communication device, the communication unit may be a transceiver or an input/output interface, and the processing unit may be a processor.

In another implementation, the apparatus is a chip, a chip system, or a circuit used in the communication device. When the apparatus is a chip, a chip system, or a circuit used in the communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

According to a fourth aspect, a packet forwarding apparatus is provided, including a processor. The processor is coupled to a memory, and may be configured to execute instructions in the memory, to implement the method according to the first aspect or the second aspect. Optionally, the apparatus further includes a communication interface. The processor is coupled to the communication interface, and the communication interface is configured to externally transmit data and/or instructions. Optionally, the apparatus further includes the memory.

In an implementation, the apparatus is a communication device.

In another implementation, the apparatus is a chip, a chip system, or a circuit used in the communication device.

According to a fifth aspect, a packet forwarding apparatus is provided. The apparatus includes: a memory, configured to store a program; and a processor, configured to execute the program stored in the memory. When the program stored in the memory is executed, the processor is configured to perform the method according to the first aspect or the second aspect.

In an implementation, the apparatus is a communication device.

In another implementation, the apparatus is a chip, a chip system, or a circuit used in the communication device.

According to a sixth aspect, this application provides a processor, configured to perform the methods according to the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the information is input into the processor.

Based on the principle, for example, receiving the packet in the method may be understood as receiving the input packet by the processor.

Unless otherwise specified, or if operations such as transmitting, sending, and obtaining/receiving related to the processor do not contradict an actual function or internal logic of the operations in related descriptions, all the operations may be more usually understood as operations such as outputting, receiving, and inputting of the processor, instead of operations such as transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (Read Only Memory, ROM). The memory and the processor may be integrated on a same chip, or may be separately disposed on different chips. A type of the memory and a manner of disposing the memory and the processor are not limited in this embodiment of this application.

According to a seventh aspect, a computer-readable storage medium is provided. The computer-readable medium stores program code to be executed by a device, and the program code is used to perform the method according to the first aspect or the second aspect.

According to an eighth aspect, a computer program product including instructions is provided. When the computer program product is run on a computer, the computer is enabled to perform a method according to the first aspect or the second aspect.

According to a ninth aspect, a chip is provided. The chip includes a processor and a communication interface. The processor reads, through the communication interface, instructions stored in a memory, to perform the method according to the first aspect or the second aspect.

Optionally, in an implementation, the chip may further include the memory, the memory stores instructions, the processor is configured to execute the instructions stored in the memory, and when the instructions are executed, the processor is configured to perform the method according to the first aspect or the second aspect.

According to a tenth aspect, a chip system is provided, including a logic circuit. The logic circuit is configured to: be coupled to an input/output interface, and transmit data through the input/output interface, to perform the method according to the first aspect or the second aspect.

According to an eleventh aspect, a communication system is provided, including the first device and the second device.

## BRIEF DESCRIPTION OF DRAWINGS

FIG. 1 is a schematic diagram of an application scenario applicable to embodiments of this application;
FIG. 2 is a schematic diagram of dual feed and selective receiving;
FIG. 3 is a schematic diagram of order-preserving processing performed by a network egress node;
FIG. 4 is a schematic diagram of a DIP technology;
FIG. 5 is a schematic diagram of cycle mapping;
FIG. 6 is a schematic flowchart of a packet forwarding method according to an embodiment of this application;
FIG. 7 is a schematic diagram of an SRv6 data plane applicable to an embodiment of this application;
FIG. 8 is a schematic diagram of an SID structure applicable to an embodiment of this application;
FIG. 9 is a schematic diagram of packet forwarding applicable to an embodiment of this application;
FIG. 10 is a schematic diagram of an SR-MPLS data plane applicable to an embodiment of this application;
FIG. 11 is a schematic diagram of a label applicable to an embodiment of this application;
FIG. 12 is a schematic diagram of packet forwarding applicable to another embodiment of this application;
FIG. 13 is a schematic diagram of packet forwarding applicable to another embodiment of this application;
FIG. 14 is a schematic diagram of a dual feed and selective receiving scenario according to an embodiment of this application;
FIG. 15 is a schematic diagram of a cycle reuse scenario of a DIP according to an embodiment of this application;
FIG. 16 is a schematic diagram of an E2E zero jitter scenario according to an embodiment of this application;
FIG. 17 is a schematic diagram of a single-flow latency compensation scenario according to an embodiment of this application;
FIG. 18 is a schematic diagram of a single-flow latency compensation scenario according to another embodiment of this application;
FIG. 19 is a schematic block diagram of a packet forwarding apparatus according to an embodiment of this application;
FIG. 20 is a schematic block diagram of a structure of a packet forwarding apparatus according to an embodiment of this application; and
FIG. 21 is a schematic block diagram of a structure of a chip system according to another embodiment of this application.

## DESCRIPTION OF EMBODIMENTS

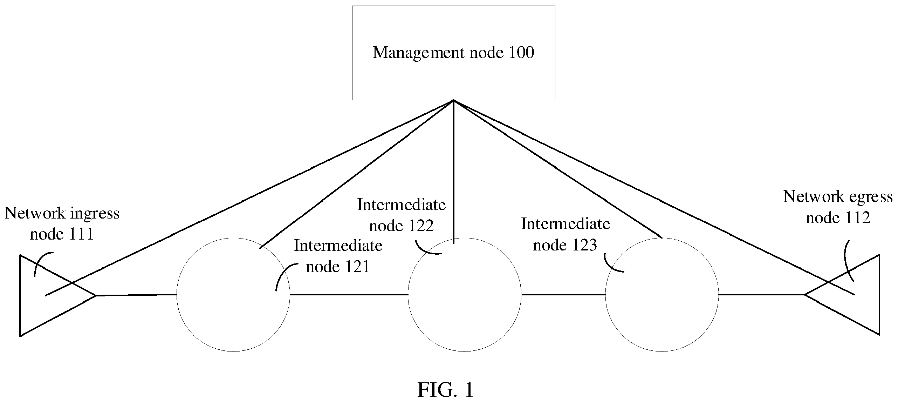

The following describes technical solutions of this application with reference to accompanying drawings.
To help a person skilled in the art better understand the technical solutions of this application, a background and a related technology in the technical solutions of this application are first briefly described.
For example, FIG. 1 is a schematic diagram of an application scenario applicable to embodiments of this application.
As shown in FIG. 1, the application scenario may include one or more devices, for example, may include a management node 100, a network ingress node 111, a network egress node 112, and several intermediate nodes shown in FIG. 1 such as an intermediate node 121, an intermediate node 122, and an intermediate node 123. Any device in the management node 100, the network ingress node 111, the network egress node 112, and the intermediate nodes may be a network device, or a chip disposed inside the network device. The device may be a network device that supports a high-speed Ethernet interface (for example, 200 G or 400 G). The device includes but is not limited to a core router, an edge router, an optical transport network (optical transport network, OTN) transmission device, an OTN optical service unit (optical service unit, OSU), a specific scenario-oriented network protocol-based radio access network (internet protocol radio access network, IPRAN), and a switch device, for example, a packet transport network (packet transport network, PTN) box-shaped or frame-shaped switch device.
A node in subsequent embodiments may be the management node 100, the network ingress node 111, the network egress node 112, the intermediate node 121, the intermediate node 122, or the intermediate node 123 shown in FIG. 1.
It should be understood that, FIG. 1 merely shows an example description. This is not limited. For example, the application scenario may include more or fewer devices. For another example, embodiments of this application may be applied to an (internet protocol, IP) network of any scale, including a large-scale operator network, a small-scale campus network, and the like.
In many scenarios such as ultra-reliable and low latency communications (ultra-reliable low-latency communication, URLLC), industrial Internet, and a smart factory, there may be a clear requirement on network transmission reliability. It needs to ensure that there is no packet loss in end-to-end transmission of a service at a high probability (for example, 99. 99% or higher) in a network. A common method for ensuring reliability is to avoid a packet loss and service interruption caused by a node or link fault, a line bit error, or the like as much as possible through multi-feed and selective receiving.
It should be understood that, "multi-feed" mentioned for a plurality of times in embodiments of this application indicates that a same packet is transmitted through a plurality of paths. "Multi-feed" may be "dual feed". To be specific, transmission is performed through two paths. Alternatively, "multi-feed" may be "triple feed or more". To be specific, transmission is performed through three or more paths.

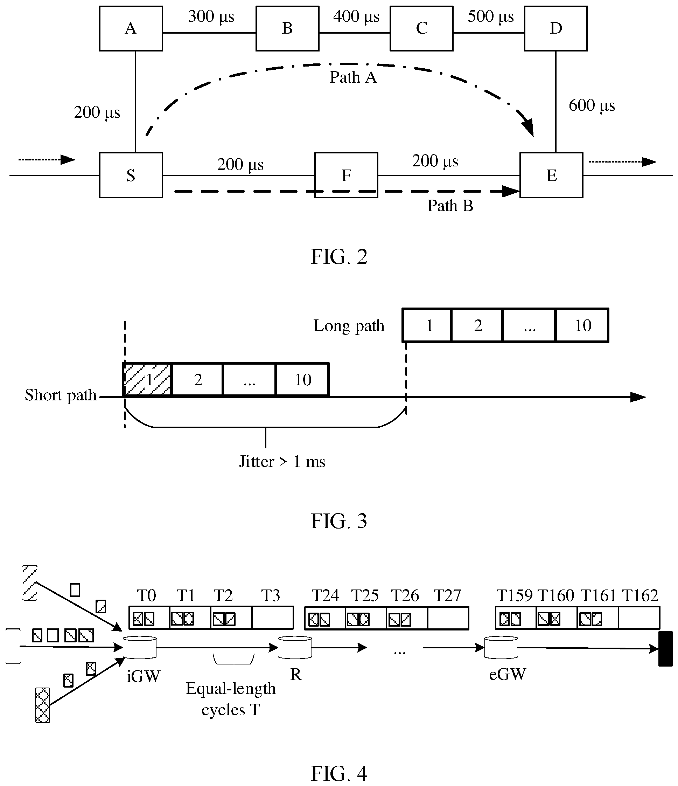

For example, FIG. 2 is a schematic diagram of dual feed and selective receiving.

As shown in FIG. 2, a node S may represent a network ingress node, a node E may represent a network egress node, and other nodes may be considered as intermediate nodes. The network ingress node may also be referred to as, for example, an ingress gateway node, a dual-feed node, or a packet dual-feed node. The network egress node may also be, for example, referred to as an egress gateway node, a selective receiving node, or a packet selective receiving node. The intermediate node, that is, an intermediate network node, may also be referred to as, for example, a forwarding node, an intermediate forwarding node, or a packet forwarding node.

As shown in FIG. 2, a data flow enters a network through the network ingress node S, is forwarded through the intermediate node, and finally leaves the network through the network egress node E. In a dual feed and selective receiving mode, the network ingress node S duplicates each received data packet, adds a same packet sequence number to the data packet, and sends two packets with a same sequence number to the network egress node E through different paths, for example, a path A and a path B in FIG. 2. After receiving same packets, the network egress node E sends one packet, and discards the other packet.

Numbers such as 200 microseconds ($\mu$s), 300 $\mu$s, 400 $\mu$s, 500 $\mu$s, and 600 $\mu$s between adjacent nodes in FIG. 2 indicate transmission duration between the adjacent nodes. For example, it needs to take approximately 300 $\mu$s to transmit a packet from a node A to a node B. It can be learned that, duration required for transmission on different paths is also different, and a latency difference may be generated for a same service on different paths. In a case of dual feed and selective receiving, a latency difference of a same service between different paths may be very large, for example, may reach tens of milliseconds (ms). This may cause a great jitter on a destination node.

Usually, the network egress node E further needs to perform order-preserving processing on the received packet. To be specific, if a packet with a large number is received before a packet with a small number is received and sent, the packet with a large number is buffered first. The packet with a large number is not sent until all packets with a small number are sent, as shown in FIG. 3.

For example, FIG. 3 is a schematic diagram of order-preserving processing performed by a network egress node.

As shown in FIG. 3, a packet is transmitted on two paths. The two paths are marked as a long path and a short path for distinguishing. On a network egress node E (that is, a packet selective receiving node E), if a packet 1 sent through the short path is lost, in other words, the network egress node E receives only a packet 2 to a packet 10 in packets sent through the short path, the network egress node E does not allow a packet with a larger number to be sent, until the packet 1 on the long path arrives and is sent. In other words, before the packet 1 on the long path is received, all packets whose numbers are greater than 1 and that arrive through the short path need to be buffered first. In some cases, a buffer size required by the network egress node E needs to cover a maximum latency difference (that is, a jitter) of the two paths. A value of the jitter usually includes: a line transmission latency difference of the packet on the two paths, a queuing latency difference and a processing latency difference of the packet in nodes on the two paths. When conventional IP best-effort (best-effort) scheduling is used, the value of the jitter is large, usually at a level of ms or even tens of ms.

A buffer size available for selective receiving in a mainstream router device is very limited (approximately 1000 packets), and can hardly support a jitter at the level of ms or a higher level. Therefore, a latency difference of a multi-feed (for example, dual feed) path needs to be reduced as much as possible, to ensure that a jitter of the path falls within a range that may be allowed by a selective receiving buffer.

A technology of ensuring an end-to-end (end-to-end, E2E) deterministic latency of a network is a deterministic network (Deterministic IP, DIP) technology. The deterministic latency means that a latency and a jitter of a packet in the network satisfies an upper limit when the packet meets a burst requirement.

For example, FIG. 4 is a schematic diagram of a DIP technology.

A time axis of outbound interfaces of all devices is divided into cycles with a length of T. For example, T=10 $\mu$s. Herein, iGW represents a network ingress node, eGW represents a network egress node, and R represents an intermediate forwarding node. A packet is enqueued in a determined forwarding cycle at each hop, to avoid burst accumulation across cycles and achieve determinacy of a latency. A resource that is not used in each cycle may be reused by another packet.

The DIP technology mainly includes: control plane resource reservation and path planning, cycle mapping learning, edge shaping, and label switching and forwarding in a cycle. The following briefly describes content of these aspects.

(1) Control plane resource reservation and path planning: A determined forwarding path is planned for each flow (flow), and a resource is reserved for the flow in hop-by-hop (or node-by-node) cycles, to ensure that sufficient resources are available in the corresponding cycle.

(2) Cycle mapping learning: A node obtains a cycle through division based on a local clock of the node.

In a common design, cycle lengths of all nodes are the same, for example, are denoted as T. For a pair of any adjacent nodes, a fixed cycle mapping relationship may be established because a transmission path between the pair of any adjacent nodes is fixed.

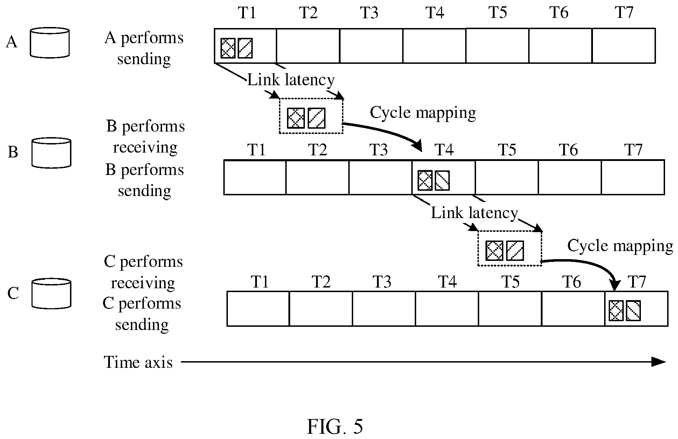

For example, FIG. 5 is a schematic diagram of cycle mapping.

As shown in FIG. 5, for adjacent nodes in a network, a fixed cycle mapping relationship is established between a cycle of an outbound interface of an upstream node and a cycle of an outbound interface of a downstream node: X -> X+Δ. Herein, Δ is a constant. The cycle mapping relationship represents that a packet sent in a cycle X of the upstream node is sent in a cycle (X+Δ) of the downstream node. For example, as shown in FIG. 5, assuming that T1 of a node A (iGW or an intermediate node) is mapped to T4 of a node B, a cycle offset constant Δ between the node A and the node B is 3, and a cycle mapping relationship between the node A and the node B satisfies: X -> X+3. A subsequent cycle also follows the cycle mapping relationship. For example, T2 of the node A is mapped to T5 of the node B, and T3 of the node A is mapped to T6 of the node B.

In the following, "cycle mapping relationship" and "mapping relationship" are sometimes interchangeably used, and both may indicate a relationship between time (for example, a cycle) of the outbound interface of the upstream node and time (for example, a cycle) of the outbound interface of the downstream node.

(3) Edge shaping: The network ingress node iGW shapes received traffic, and sends the traffic in a manner in which a quantity of bytes in each flow in each cycle T do not exceed (Bi x T). Bi represents a bandwidth that is of each flow and that is specified in a service level agreement (service level agreement, SLA). When a packet is sent, a sending cycle corresponding to the packet is encapsulated into the packet in a form of a label.

(4) Label switching and forwarding in a cycle: After receiving a packet, a node identifies that the packet carries a label (for example, the packet carries a cycle label, and as shown in FIG. 5, the packet sent by the node A to the node B carries a cycle label T1), calculates a new label of the packet at a current hop based on a cycle mapping relationship, and updates the new label to the packet (for example, a packet sent by the node B carries a cycle label T4). Each cycle corresponds to a gate control queue. The queue is enabled at a start of the cycle, to allow a packet to be sent. The queue is disabled at an end of the cycle, to forbid a packet from being sent. The node enables, based on the calculated new label, the packet to enter a queue corresponding to a corresponding local cycle, to wait to be sent.

In a DIP mechanism, packets in a same cycle are maintained in a same forwarding cycle on nodes on a subsequent same path, and packets in different cycles are not accumulated in a same cycle, to avoid a microburst and hop-by-hop accumulation. After a packet enters a cycle at a first hop, cycles of subsequent hops are determined. Therefore, an upper limit of an end-to-end latency is also determined. If the packet has a jitter of T at each of a first node and an end node, an upper limit of an end-to-end jitter is 2T. The jitter is irrelevant to a path distance and a quantity of hops.

It should be understood that, for related descriptions of the DIP technology, refer to the conventional technology. This is not strictly limited herein.

In an existing solution, a first-hop node encapsulates a sending cycle of a packet on each node on a path, and a subsequent node identifies corresponding information of the packet, and sends the packet in a target cycle of a current hop. A data plane needs to encapsulate node-by-node target cycles. The information is an absolute cycle count. If a cycle mapping relationship between adjacent nodes on a path changes, a target cycle of the packet on the subsequent node is incorrect. Consequently, a cycle resource is incorrectly occupied, and disorder, a case in which a jitter requirement is not met, data overflow, and the like may occur.

In view of this, based on the DIP technology, an embodiment of this application provides a solution, so that a latency difference between a plurality of paths can be reduced or even eliminated, and packet disorder and data overflow in a cycle can be avoided even if a cycle mapping change occurs between an upstream node and a downstream node.

The following describes in detail embodiments of this application with reference to accompanying drawings.

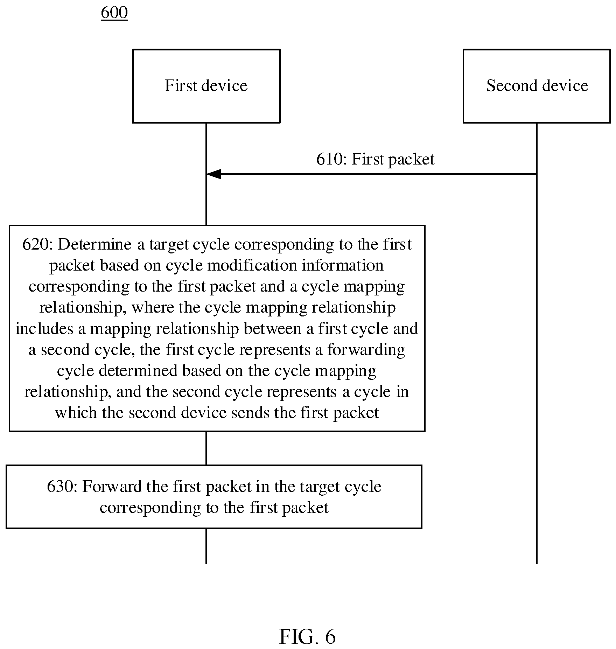

FIG. 6 is a schematic flowchart of a packet forwarding method according to an embodiment of this application. The method 600 may include the following steps.

610: A first device receives a first packet from a second device.

For example, both the first device and the second device may be intermediate nodes, for example, intermediate nodes in FIG. 1 to FIG. 5; or the first device is an intermediate node, and the second device is a network ingress node.

620: The first device determines a target cycle corresponding to the first packet based on cycle modification information corresponding to the first packet and a cycle mapping relationship. The cycle mapping relationship includes a mapping relationship between a first cycle and a second cycle, the first cycle represents a forwarding cycle determined based on the cycle mapping relationship, and the second cycle represents a cycle in which the second device sends the first packet.

The first packet sent by the second device to the first device carries the second cycle, or carries the second cycle and the cycle modification information corresponding to the first packet.

630: The first device forwards the first packet in the target cycle corresponding to the first packet.

The cycle mapping relationship is the foregoing cycle mapping relationship. For example, a fixed cycle mapping relationship is established between the second device and the first device: X -> X+$\Delta$, where $\Delta$ is a constant. The cycle mapping relationship represents that a packet sent by the second device in a cycle X is sent in a cycle (X+$\Delta$) of the first device. A cycle in which the second device sends a packet is a second cycle, and a first cycle is (second cycle+$\Delta$). A target cycle in which the first device actually sends a packet is determined based on both (second cycle+$\Delta$) and cycle modification information.

In this embodiment of this application, a target cycle in which an intermediate node actually sends a packet is determined based on both a cycle mapping relationship and cycle modification information. In this way, even if a cycle mapping change occurs between an upstream node and a downstream node, because the cycle modification information is considered, packet disorder and data overflow in a cycle can be reduced or even avoided, and an end-to-end deterministic latency and jitter can be ensured as much as possible.

In a same cycle, the second device may send one or more packets to the first device. For example, the first device further receives a second packet sent by the second device in the second cycle. In other words, the second device sends two packets to the first device in the second cycle, and the two packets are respectively marked as the first packet and the second packet. A cycle T1 in FIG. 5 is used as an example. A node A may send two packets to a node B.

In a possible case, the target cycle corresponding to the first packet may be different from a target cycle corresponding to the second packet. For example, the target cycle corresponding to the first packet is determined based on the cycle modification information corresponding to the first packet and the cycle mapping relationship, and the target cycle corresponding to the second packet is determined based on cycle modification information corresponding to the second packet and the cycle mapping relationship. The cycle modification information corresponding to the first packet is different from the cycle modification information corresponding to the second packet. Therefore, the target cycle corresponding to the first packet is different from the target cycle corresponding to the second packet. For another example, the target cycle corresponding to the first packet is determined based on the cycle modification information corresponding to the first packet and the cycle mapping relationship, the target cycle corresponding to the second packet is determined based on the cycle mapping relationship, the target cycle corresponding to the first packet is modified or adjusted relative to the first cycle, and the target cycle corresponding to the second packet is the first cycle. Therefore, the target cycle corresponding to the first packet is different from the target cycle corresponding to the second packet. Specifically, the following provides descriptions with reference to cycle modification information in Aspect 1.

There may be at least the following two implementations in which the first device determines the target cycle corresponding to the first packet.

In a possible implementation, the first device receives the cycle modification information corresponding to the first packet, and determines the target cycle corresponding to the first packet based on the cycle modification information corresponding to the first packet and the cycle mapping relationship.

For example, the first device receives cycle modification information sent by a target device, for example, the cycle modification information corresponding to the first packet. The target device obtains the cycle modification information corresponding to the first packet, the cycle modification information includes an offset cycle quantity corresponding to the first packet, and the offset cycle quantity corresponding to the first packet is a quantity of cycles by which the target cycle corresponding to the first packet is offset relative to the first cycle. The target device sends the offset cycle quantity corresponding to the first packet to the first device. After receiving the offset cycle quantity corresponding to the first packet, the first device may determine the target cycle corresponding to the first packet based on the offset cycle quantity corresponding to the first packet and the cycle mapping relationship. Assuming that the offset cycle quantity corresponding to the first packet is $O$, the cycle mapping relationship between the second device and the first device is X -> X+$\Delta$, and the cycle in which the second device sends the first packet is the second cycle, the first device determines that the target cycle corresponding to the first packet is (second cycle+$\Delta$+$O$).

In another possible implementation, the first device receives information about the target cycle corresponding to the first packet, and forwards the first packet in the target cycle corresponding to the first packet.

For example, the target device sends information about a target cycle to the first device, for example, the information about the target cycle corresponding to the first packet. The target device obtains the cycle modification information corresponding to the first packet, the cycle modification information includes the offset cycle quantity corresponding to the first packet, and the target device determines the target cycle corresponding to the first packet based on the offset cycle quantity corresponding to the first packet and the cycle mapping relationship. The target device sends the target cycle corresponding to the first packet to the first device. After receiving the target cycle corresponding to the first packet, the first device may enable the first packet to enter a queue corresponding to the corresponding target cycle, to wait to be sent.

A manner in which the target device obtains the offset cycle quantity is described below with reference to content in Aspect 2.

The target device may be, for example, a control plane node; or may be a first-hop node (that is, a network ingress node), for example, a node S in FIG. 2 or iGW in FIG. 4; or may be a previous-hop node of a current node.

When the target device is a control plane node, for example, that the target device obtains the offset cycle quantity may be understood as that the target device determines the offset cycle quantity. When the target device is a first-hop node (that is, a network ingress node), for example, that the target device obtains the offset cycle quantity may be understood as that the target device receives the offset cycle quantity, or may be understood as that the target device determines the offset cycle quantity.

Generally, the following mainly describes the solution of this embodiment of this application in detail from several aspects by mainly using an example in which a cycle in which the second device sends a packet to the first device is a second cycle, a forwarding cycle determined by the first device based on the cycle mapping relationship is a first cycle, and an actual packet forwarding cycle determined by the first device based on the cycle mapping relationship and cycle modification information is a target cycle.

Aspect 1: Representation form of the cycle modification information

The cycle modification information may be understood as information about a cycle modified (or adjusted) relative to the forwarding cycle determined based on the cycle mapping relationship, that is, information about a cycle by which the target cycle is modified (or adjusted) relative to the first cycle.

In a possible implementation, the cycle modification information includes an offset cycle quantity, and the offset cycle quantity is a quantity of cycles by which the target cycle is offset relative to the first cycle. In other words, the target cycle is determined based on both the first cycle and the offset cycle quantity. For distinguishing, the offset cycle quantity is denoted as $O$. For example, the offset cycle quantity may also be referred to as a quantity of delayed cycles, a quantity of modified cycles, or a quantity of adjusted cycles. A specific name of the offset cycle quantity does not limit the protection scope of this embodiment of this application.

For example, the offset cycle quantity $O$ is 0. In this case, the target cycle is the first cycle. In other words, the target cycle does not need to be delayed on the first device.

For another example, the offset cycle quantity $O$ is an integer greater than 0. In this case, it can be understood that, the target cycle is delayed by $O$ cycles relative to the first cycle. In other words, the target cycle is (first cycle+$O$). Assuming that the fixed cycle mapping relationship is established between the second device and the first device: X -> X+$\Delta$, the target cycle is (second cycle+$\Delta$+$O$).

It should be understood that, the foregoing is an example description. This is not limited. For example, in some cases, the offset cycle quantity $O$ may be less than 0. In other words, the target cycle is $O$ cycles earlier than the first cycle.

It should be further understood that, offset cycle quantities corresponding to different packets are not limited in this embodiment of this application. For example, different packets may correspond to different offset cycle quantities. FIG. 5 is used as an example. Two packets in a same cycle, for example, two packets in the cycle T1 on the node A may have different target cycles on the node B. For example, one packet is sent in a cycle T4, and the other packet is sent in a cycle (T4+$O$) ($O$ is greater than 0).

The foregoing describes a possible representation form of the cycle modification information with reference to Aspect 1. It should be understood that, the representation form of the cycle modification information is not limited in this embodiment of this application. Any solution to which the cycle modified (or adjusted) relative to the forwarding cycle determined based on the cycle mapping relationship is applied should fall within the protection scope of this embodiment of this application.

The following describes, with reference to Aspect 2, a manner of determining the cycle modification information.

Aspect 2: Manner of determining the cycle modification information

The cycle modification information may be determined based on an actual communication situation or an actual communication requirement.

In a possible implementation, the cycle modification information may be determined based on one or more piece of the following information: a latency difference between a plurality of paths used to transmit the packet, a preset range that needs to be satisfied by the latency difference between the plurality of paths used to transmit the packet, an available resource on the plurality of paths, and a resource available for the packet in the forwarding cycle determined based on the cycle mapping relationship.

In this manner, for an actual packet sending cycle of the packet on each node, a latency difference of transmitting the packet on the plurality of paths and/or the available resource of the packet on the plurality of paths are comprehensively considered, so that an end-to-end deterministic latency and jitter can be ensured as much as possible.

Determining the offset cycle quantity is used as an example for description.

For example, an offset cycle quantity of the packet on each node is determined based on the latency difference between the plurality of paths used to transmit the packet.

An example shown in FIG. 2 is used as an example. A packet is transmitted on two paths. A path A is a long path (that is, a path with a long transmission time period), and a path B is a short path (that is, a path with a short transmission time period). For example, it may be determined, based on a latency difference between the path A and the path B, that a target cycle of a node F is delayed by *O* cycles relative to the forwarding cycle determined based on the cycle mapping relationship. Therefore, a cycle is delayed on each node (for example, the node F) on the path B, to reduce a latency difference between different paths as much as possible.

For another example, an offset cycle quantity of the packet on each node is determined based on the preset range that needs to be satisfied by the latency difference between the plurality of paths used to transmit the packet.

An example shown in FIG. 2 is used as an example. A packet is transmitted on two paths. A path A is a long path (that is, a path with a long transmission time period), and a path B is a short path (that is, a path with a short transmission time period). For example, it may be determined, based on a condition that needs to be met by a latency difference between the path A and the path B (for example, the latency difference needs to be controlled to fall within a preset range), that a target cycle of a node F is delayed by *O* cycles relative to the forwarding cycle determined based on the cycle mapping relationship. Therefore, a cycle is delayed on each node (for example, the node F) on the path B, to ensure that a latency difference between different paths falls within a specific range.

The foregoing describes, with reference to Aspect 2, the manner of determining the cycle modification information. It should be understood that, the foregoing is merely an example description. This is not limited. For example, the offset cycle quantity may be determined based on the one or more pieces of information, or may be a specified quantity of cycles delayed on each node on the short path by default (for example, one cycle is delayed by default), or may be determined based on a communication situation of a plurality of flows on a same node, or the like. For another example, an offset cycle quantity of a packet on a node may be determined in consideration of a transmission situation of another flow or another packet on the node, or may be determined in consideration of only a transmission situation of the packet on a plurality of paths.

With reference to Aspect 3, the following describes, by using the first device as an example, a manner in which each node obtains a target cycle.

Aspect 3: Manner in which the first device obtains the target cycle

In a possible implementation, the first device calculates the target cycle based on the cycle mapping relationship and the cycle modification information, as described in step 620.

For example, if the offset cycle quantity corresponding to the packet is *O,* the cycle mapping relationship between the second device and the first device is X -> X+Δ, and the cycle in which the second device sends the first packet is X, the first device determines that the target cycle Y corresponding to the first packet is (X+Δ+*O*).

In this manner, each node calculates the target cycle based on the cycle mapping relationship and the cycle modification information, to reduce a calculation load of calculating a target cycle of each node on a path by a control plane device or the first-hop node, and reduce planning complexity.

In this manner, the following describes, with reference to Aspect 4, the manner in which the first device obtains the cycle modification information.

In another possible implementation, the first device receives the information about the target cycle.

In this manner, each node may directly forward a packet based on the target cycle, to reduce a latency caused by calculating the target cycle.

For example, the first device receives the information about the target cycle from the second device. In other words, when an upstream node sends a packet to a downstream node, information about a target cycle of the downstream node may also be sent to the downstream node. In this case, the cycle modification information may be carried in the packet, or may be separately sent to the downstream node.

For another example, the first device receives the information about the target cycle from the control plane device. In other words, the control plane device may deliver the information about the target cycle to each node. For example, the control plane device may deliver, to each node, information about a target cycle corresponding to each node; or the control plane device may broadcast information about target cycles to all nodes in a unified manner, and each node reads a target cycle corresponding to the node.

The foregoing describes, with reference to Aspect 3, the manner in which each node obtains the target cycle. It should be understood that, any manner in which each node can obtain the target cycle is applicable to this embodiment of this application.

The following describes, with reference to Aspect 4, a manner in which each node obtains cycle modification information.

Aspect 4: Manner of obtaining the cycle modification information

Manner 1: The cycle modification information is carried in the packet.

In Manner 1, when the upstream node sends the packet to the downstream node (for example, when the second device sends the packet to the first device), the upstream node may further send the cycle modification information to the downstream node. The cycle modification information may be carried in the packet. After receiving the packet, each node reads the cycle modification information carried in the packet, and calculates a target cycle of the packet, so that the packet enters a queue corresponding to the corresponding target cycle and waits to be sent.

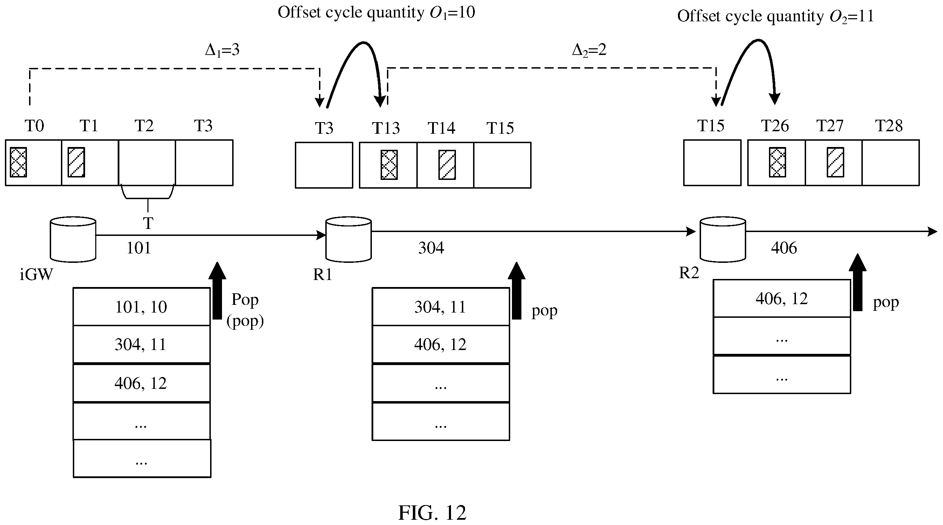

In Manner 1, when the upstream node sends the packet to the downstream node, the packet may carry cycle modification information of one or more downstream nodes. Each node may separately read corresponding cycle modification information, and when sending the cycle modification information to a next downstream node, may send only cycle modification information corresponding to the next downstream node and a downstream node of the next downstream node. The following provides descriptions with reference to FIG. 12.

Manner 2: A control plane delivers the cycle modification information.

In Manner 2, the packet carries a cycle label, and the control plane (controller) may calculate an offset cycle quantity of a flow on each node on a path based on a requirement, and deliver the cycle modification information to each node. After receiving the packet, each node may calculate a target cycle of the packet based on the cycle modification information, so that the packet enters a queue corresponding to the corresponding target cycle and waits to be sent.

Manner 3: Reading is performed locally.

Each node may pre-store or maintain the cycle modification information. When the cycle modification information needs to be used, each node locally reads the cycle modification information, and directly calculates the target cycle of the packet.

For example, the control plane delivers the cycle modification information in advance, and after receiving the cycle modification information, each node stores or maintains the cycle modification information. For example, the control plane delivers corresponding cycle modification information of each node to the node. In this way, information maintained by each node is little, occupies small space, and is easy to read. For another example, the control plane broadcasts cycle modification information to all nodes in a unified manner, and each node queries an offset cycle quantity corresponding to the node. In this way, signaling overheads of the control plane are low.

The following describes two possible cases.

In a possible case, there is a correspondence between a flow and cycle modification information. For example, each node stores or maintains a form similar to Table 1.

**Table 1**

| Flow | Offset cycle quantity |
|--------|-----------------------|
| Flow 1 | O1 |
| Flow 2 | O2 |
| Flow 3 | O3 |

Each node may determine a corresponding offset cycle quantity based on a flow in which the packet is located. For example, if a packet received by a node belongs to the flow 1, it is determined that a corresponding offset cycle quantity is O1. It should be understood that, different nodes may store different offset cycle quantities corresponding to each flow in Table 1.

In another possible case, there is a correspondence between each node and cycle modification information. It is assumed that a path is R1 -> R2 -> R3. For example, a form similar to Table 2 is locally stored or maintained.

**Table 2**

| Node on a path | Offset cycle quantity |
|----------------|-----------------------|
| R1 | O1' |
| R2 | O2' |
| R3 | O3' |

After receiving the packet, each node may read an offset cycle quantity corresponding to each node. For example, the control plane broadcasts a form shown in Table 2 to all the nodes in advance. For example, each node may first store the form in Table 2. After the packet arrives at the node, the node queries the offset cycle quantity corresponding to the node, and may discard Table 2 after the packet is used, to save storage resources. For another example, each node may first query the offset cycle quantity corresponding to each node, and then store only the offset cycle quantity corresponding to each node, to save resources.

It should be understood that, Table 1 and Table 2 are merely examples, and any variation of the foregoing tables falls within the protection scope of this embodiment of this application. For example, Table 1 may include more flows. For another example, Table 2 may include more nodes, or include more correspondences between a node on a path and an offset cycle quantity. In addition, Table 1 and Table 2 may be used in combination. In other words, there is a correspondence between a flow, a node, and an offset cycle quantity, and the like.

The foregoing describes, with reference to Aspect 4, the manner in which each node obtains the cycle modification information. It should be understood that, any manner in which each node can obtain the cycle modification information is applicable to this embodiment of this application.

For understanding, the following mainly describes specific applications of Manner 1 and Manner 2 by using an example in which the target cycle is delayed by O cycles relative to the first cycle. In the following specific embodiments, iGW, eGW, and R (for example, R1 and R2) respectively represent a network ingress node, a network egress node, and an intermediate forwarding node.

Manner 1: The cycle modification information is carried in the packet.

The following provides example descriptions with reference to two possible cases by using an example in which the packet is a segment routing (segment routing, SR) packet. In brief, a source path selection mechanism is used for SR, a segment identifier (segment identifier, SID) allocated to a node through which a path passes is encapsulated in advance on a source node. When the packet passes through an SR node, the node forwards the packet based on an SID of the packet.

Case 1: SRv6-based solution

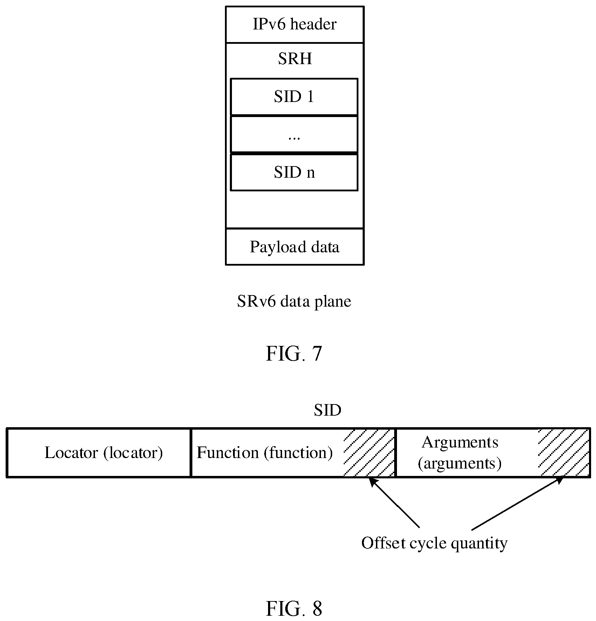

For example, FIG. 7 is a schematic diagram of an SRv6 data plane applicable to an embodiment of this application. As shown in FIG. 7, the SRv6 data plane includes but is not limited to the following parts: an IPv6 header, an SR header (segment routing header, SRH), and payload (payload) data. The SRH part includes, for example, segment left (segment left, SL). The SRH part includes one or more SID fields, for example, respectively denoted as an SID 1, an SID 2, ..., and an SID n.

For example, FIG. 8 is a schematic diagram of an SID structure applicable to an embodiment of this application. As shown in FIG. 8, the SID field includes at least three fields: "locator (locator)", "function", and "arguments". For example, "locator" represents an identifier allocated to a network node in a network, and may be used for routing and packet forwarding; "function" represents an ID value allocated by a device to a local forwarding instruction, and different forwarding behaviors may be expressed by using different function IDs; and "arguments" represents a parameter required when a forwarding instruction is executed, and the parameter may include, for example, a flow, a service, or any other related variable information.

For a specific structure of SRv6, refer to existing descriptions. Details are not described herein.

In a possible implementation, the SID field in the SRv6 header may be reused, and the cycle modification information is encapsulated into a corresponding SID, for example, the SRH part in FIG. 7. The cycle modification information, for example, the offset cycle quantity, may be carried in "function" in the SID field, or may be carried in "arguments" in the SID field. Usually, the cycle modification information requires a maximum of 5 bits (bits).

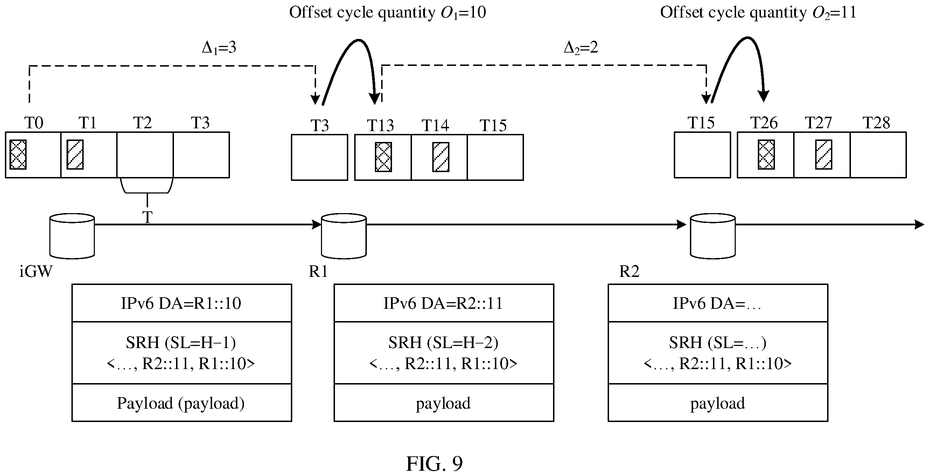

For example, it is assumed that an offset cycle quantity on the node R2 is 11, and an offset cycle quantity on the node R1 is 10. The node iGW identifies a flow, and encapsulates the cycle modification information into the SRH part. The cycle modification information in the SRH part may be, for example, denoted as <..., R2:: 11, R1:: 10>. The intermediate node identifies cycle modification information corresponding to a current hop in a destination address (destination address, DA), and enables, based on a cycle carried in the packet and a mapping relationship between an upstream node and a downstream node, the packet to enter the queue corresponding to the corresponding target cycle to wait to be sent. For ease of understanding, descriptions are provided with reference to FIG. 9.

For example, FIG. 9 is a schematic diagram of packet forwarding applicable to an embodiment of this application.

As shown in FIG. 9, it is assumed that the packet is sent in a cycle T0 of iGW. A cycle offset constant of the node iGW and the node R1 is denoted as $\triangle_1$, and the offset cycle quantity of the packet on the node R1 is denoted as $O_1$. It is assumed that $\triangle_1=3$ and $O_1=10$. A cycle offset constant of the node R1 and the node R2 is denoted as $\triangle_2$, and the offset cycle quantity of the packet on the node R2 is denoted as $O_2$. It is assumed that $\triangle_2=2$ and $O_2=11$.

After iGW encapsulates the packet with corresponding information (for example, the cycle modification information), the packet carries the cycle label T0 and arrives at a next hop, namely, the node R1. After receiving the packet, the node R1 reads the related information in a packet header. For example, the node R1 identifies that an offset cycle quantity corresponding to a current hop in a DA is 10. The node R1 calculates a target cycle of the packet at a current hop, namely, the node R1 based on the cycle label T0, the offset cycle quantity 10, and a cycle mapping relationship with a previous hop (that is, the cycle offset constant $\triangle_1=3$), so that the packet enters a queue corresponding to the target cycle. As shown in FIG. 9, after receiving the packet, the node R1 determines, based on the cycle mapping relationship, that a sending cycle is T3; and determines, based on the offset cycle quantity 10, that the target cycle of the packet at the current hop, namely, the node R1 is $\triangle_1+T0+O_1=3+0+10=13$, that is, sends the packet in a cycle T13 of the current hop.

After the node R1 encapsulates the packet with corresponding information (for example, the cycle modification information), the packet carries the cycle label T13 and arrives at a next hop, namely, the node R2. After receiving the packet, the node R2 reads the related information in the packet header. For example, the node R2 identifies that an offset cycle quantity corresponding to a current hop in a DA is 11. The node R2 calculates a target cycle of the packet at a current hop, namely, the node R2 based on the carried cycle label T13, the offset cycle quantity 11, and a cycle mapping relationship with a previous hop (that is, the cycle offset constant $\triangle_2=2$), so that the packet enters a queue corresponding to the target cycle. As shown in FIG. 9, after receiving the packet, the node R2 determines, based on the cycle mapping relationship, that a sending cycle is T15; and determines, based on the offset cycle quantity 11, that the target cycle of the packet at the current hop, namely, the node R2 is $\triangle_2+T13+O_2=2+13+11=26$, that is, sends the packet in a cycle T26 of the current hop.

Similarly, similar operations are also performed on subsequent nodes.

It should be understood that, FIG. 9 merely shows a simple example description, and any variant solution that belongs to the solution shown in FIG. 9 is applicable to this embodiment of this application. For example, more intermediate nodes may be further included in FIG. 9. For another example, in addition to identifying the offset cycle quantity corresponding to the current hop in the DA as shown in FIG. 9, any manner in which each node can identify an offset cycle quantity corresponding to a current hop is applicable to this embodiment of this application.

Based on Case 1, the part "function" or the part "arguments" in the SID in the SRv6 header is reused to carry hop-by-hop cycle modification information (for example, the offset cycle quantity), so that active delaying can be achieved on a device, and an end-to-end deterministic latency and jitter can be ensured.

Case 2: Multi-protocol label switching (multi-protocol label switching, MPLS)-based solution

In a possible manner, an SR-MPLS header may be reused or extended to carry hop-by-hop cycle modification information of the packet.

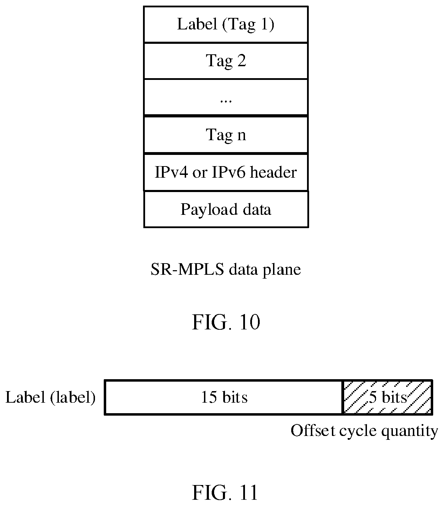

In brief, SR-MPLS represents that SR is used in an MPLS network and a label is used as an SID to forward the packet. For example, FIG. 10 is a schematic diagram of an SR-MPLS data plane applicable to an embodiment of this application. As shown in FIG. 10, the SR-MPLS data plane includes but is not limited to the following parts: a label (label) (for example, each is denoted as Tag 1, Tag 2, ..., or Tag n), an IPv4 or IPv6 header, and payload data.

In MPLS, a packet may be encapsulated with a short and length-fixed label, to implement fast forwarding on the data plane. For example, FIG. 11 is a schematic diagram of a label applicable to an embodiment of this application. As shown in FIG. 11, the label field may include 20 bits, and 5 bits in the label field may be used to carry the cycle modification information. For example, iGW identifies a flow, and encapsulates the cycle modification information into a corresponding label, and the intermediate node identifies cycle modification information corresponding to a current hop, and enables, based on the cycle carried in the packet and a cycle mapping relationship between an upstream node and a downstream node, the packet to enter the queue corresponding to the corresponding target cycle to wait to be sent.

It should be understood that, structures shown in FIG. 10 and FIG. 11 are merely described as example. For details, refer to existing descriptions. Details are not described herein again.

For example, FIG. 12 is a schematic diagram of packet forwarding applicable to another embodiment of this application.

As shown in FIG. 12, it is assumed that the packet is sent in a cycle T0 of iGW. A cycle offset constant of the node iGW and the node R1 is denoted as $\Delta_1$, and the offset cycle quantity of the packet on the node R1 is denoted as $O_1$. It is assumed that $\Delta_1=3$ and $O_1=10$. A cycle offset constant of the node R1 and the node R2 is denoted as $\Delta_2$, and the offset cycle quantity of the packet on the node R2 is denoted as $O_2$. It is assumed that $\Delta_2=2$ and $O_2=11$.

After iGW encapsulates the packet with corresponding information (for example, the cycle modification information), the packet carries the cycle label T0 and arrives at a next hop, namely, the node R1. After receiving the packet, the node R1 reads the related information in a packet header. For example, the node R1 identifies that an offset cycle quantity corresponding to a current hop is 10. The node R1 calculates a target cycle of the packet at a current hop, namely, the node R1 based on the cycle label T0, the offset cycle quantity 10, and a cycle mapping relationship with a previous hop (that is, the cycle offset constant $\Delta_1=3$), so that the packet enters a queue corresponding to the target cycle. As shown in FIG. 12, after receiving the packet, the node R1 determines, based on the cycle mapping relationship, that a sending cycle is T3; and determines, based on the offset cycle quantity 10, that the target cycle of the packet at the current hop, namely, the node R1 is $\Delta_1+T0+O_1=3+0+10=13$, that is, sends the packet in a cycle T13 of the current hop. For example, the node R1 may further pop (pop) a corresponding label, for example, "101, 10" in FIG. 12.

After the node R1 encapsulates the packet with corresponding information (for example, the cycle modification information), the packet carries the cycle label T13 and arrives at a next hop, namely, the node R2. After receiving the packet, the node R2 reads the related information in a packet header. For example, the node R2 identifies that an offset cycle quantity corresponding to a current hop is 11. The node R2 calculates a target cycle of the packet at a current hop, namely, the node R2 based on the carried cycle label T13, the offset cycle quantity 11, and a cycle mapping relationship with a previous hop (that is, the cycle offset constant $\Delta_2=2$), so that the packet enters a queue corresponding to the target cycle. As shown in FIG. 12, after receiving the packet, the node R2 determines, based on the cycle mapping relationship, that a sending cycle is T15; and determines, based on the offset cycle quantity 11, that the target cycle of the packet at the current hop, namely, the node R2 is $\Delta_2+T13+O_2=2+13+11=26$, that is, sends the packet in a cycle T26 of the current hop. For example, the node R2 may further pop a corresponding label, for example, "304, 11" in FIG. 12.

Similarly, similar operations are also performed on subsequent nodes.

It should be understood that, FIG. 12 merely shows a simple example description, and any variant solution that belongs to the solution shown in FIG. 12 is applicable to this embodiment of this application. For example, more intermediate nodes may be further included in FIG. 12. For another example, any manner in which each node can identify an offset cycle quantity corresponding to a current hop is applicable to this embodiment of this application. For example, the nodes may sequentially identify offset cycle quantities corresponding to current hops. For example, the node R1 corresponds to a first label, that is, "101, 10" in FIG. 12, the node R2 corresponds to a second label, that is, "304, 11" in FIG. 12; and so on. In this example, when forwarding a packet, each node does not need to pop a label corresponding to the node.

Based on Case 2, the SR-MPLS header is reused or extended to carry hop-by-hop cycle modification information (for example, the offset cycle quantity), so that ac active delaying effect can be achieved on a device, and an end-to-end deterministic latency and jitter is ensured.

The foregoing lists examples of two cases. This is not limited. Any solution in which the cycle modification information can be carried in the packet is applicable to this embodiment of this application.

Based on Manner 1, the cycle modification information is carried in the packet. Even if the cycle mapping relationship between an upstream node and a downstream node changes, because the cycle modification information is considered, packet disorder and data overflow in a cycle can be reduced or even avoided, and an end-to-end deterministic latency and jitter can be ensured as much as possible.

Manner 2: The control plane delivers the cycle modification information.

In a possible implementation, the control plane may send, to each node, the cycle modification information corresponding to each node. For example, the control plane sends, to the node R1, the cycle modification information corresponding to the node R1 (for example, the offset cycle quantity of the packet on the node R1), and the control plane sends, to the node R2, the cycle modification information corresponding to the node R2 (for example, the offset cycle quantity of the packet on the node R2).

It should be understood that, the foregoing implementation is merely an example description. This is not limited. For example, the control plane may send an offset cycle quantity of a flow at each hop on a path to each node. After receiving the packet, each node may query an offset cycle quantity corresponding to a current hop, and calculate a target cycle of the packet at the current hop.

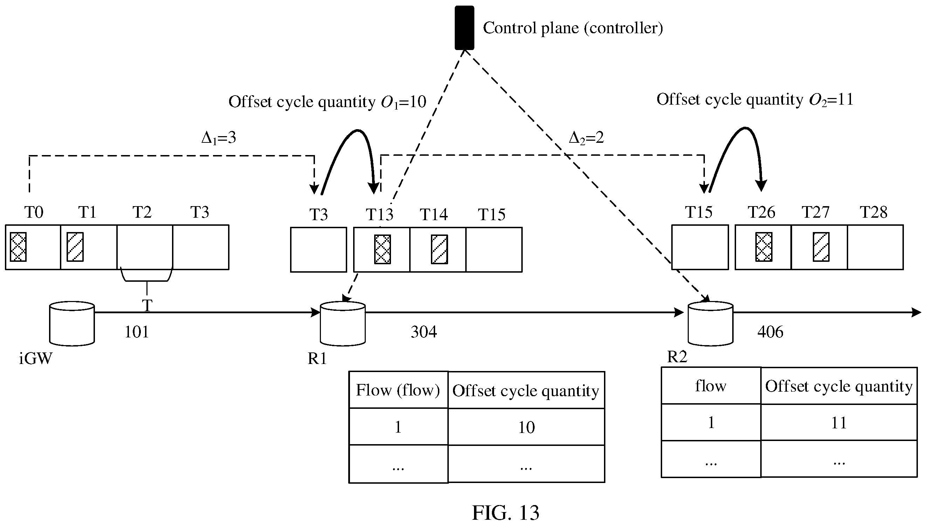

For example, FIG. 13 is a schematic diagram of packet forwarding applicable to another embodiment of this application.

As shown in FIG. 13, the control plane may deliver cycle modification information of the flow at each hop on the path to each node in a form of a table, for example, the node R1 and the node R2. For example, the cycle modification information sent by the control plane to the node R1 includes: an offset cycle quantity of the flow 1 on the node R1 is 10, and the cycle modification information sent by the control plane to the node R2 includes: an offset cycle quantity of the flow 1 on the node R2 is 11. Each node may maintain a cycle mapping relationship (that is, a mapping relationship between an upstream node and a downstream node) of a DIP and flow-by-flow cycle modification information. When the packet arrives at a node, the node identifies the packet and calculates a target cycle of the packet based on maintained information, so that the packet enters a queue corresponding to the corresponding target cycle and waits to be sent.

As shown in FIG. 13, it is assumed that the packet is sent in a cycle T0 of iGW. A cycle offset constant of the node iGW and the node R1 is denoted as $\Delta_1$, and the offset cycle quantity of the packet on the node R1 is denoted as $O_1$. It is assumed that $\Delta_1$=3 and $O_1$=10. A cycle offset constant of the node R1 and the node R2 is denoted as $\Delta_2$, and the offset cycle quantity of the packet on the node R2 is denoted as $O_2$. It is assumed that $\Delta_2$=2 and $O_2$=11.

The offset cycle quantity of the packet on the node R1 may be locally stored by the node R1. For example, the offset cycle quantity of the packet may be sent by the control plane to the node R1 in advance, and is locally stored by the node R1. Alternatively, the offset cycle quantity of the packet on the node R1 may be dynamically sent by the control plane to the node R1. In other words, when the node R1 needs to use the offset cycle quantity of the packet on the node R1, the offset cycle quantity of the packet on the node R1 is dynamically sent to the node R1. After the node R1 completes use of the offset cycle quantity of the packet on the node R1, the offset cycle quantity of the packet on the node R1 may be stored or discarded. This is not limited. The offset cycle quantity of the packet on the node R2 is similar. Details are not described herein again.

The node iGW sends the packet to a next hop, namely, the node R1, and the packet carries a cycle label T0. After receiving the packet, the node R1 calculates a target cycle of the packet at a current hop, namely, the node R1 based on the cycle label T0, the offset cycle quantity 10, and a cycle mapping relationship with a previous hop (that is, the cycle offset constant $\Delta_1$=3), so that the packet enters a queue corresponding to the target cycle. As shown in FIG. 13, after receiving the packet, the node R1 determines, based on the cycle mapping relationship, that a sending cycle is T3; and determines, based on the offset cycle quantity 10, that the target cycle of the packet at the current hop, namely, the node R1 is $\Delta_1$+T0+$O_1$=3+0+10=13, that is, sends the packet in a cycle T13 of the current hop.

The node R1 sends the packet to a next hop, namely, the node R2, and the packet carries a cycle label T 13. After receiving the packet, the node R2 calculates a target cycle of the packet at a current hop, namely, the node R2 based on the cycle label T13, the offset cycle quantity 11, and a cycle mapping relationship with a previous hop (that is, the cycle offset constant $\Delta_2$=2), so that the packet enters a queue corresponding to the target cycle. As shown in FIG. 13, after receiving the packet, the node R2 determines, based on the cycle mapping relationship, that a sending cycle is T 15; and determines, based on the offset cycle quantity 11, that the target cycle of the packet at the current hop, namely, the node R2 is $\Delta_2$+T13+$O_2$=2+13+11=26, that is, sends the packet in a cycle T26 of the current hop.

Similarly, similar operations are also performed on subsequent nodes.

It should be understood that, FIG. 13 merely shows a simple example description, and any variant solution that belongs to the solution shown in FIG. 13 is applicable to this embodiment of this application. For example, more intermediate nodes may be further included in FIG. 13.

Based on Manner 2, the packet carries the cycle label, flow-by-flow hop-by-hop cycle modification information is delivered by the control plane to each node, and each node may maintain the cycle modification information. Active delaying is achieved on the device by performing a similar target cycle calculation operation and a queuing operation. Even if a cycle mapping change occurs between an upstream and a downstream, because the cycle modification information is considered, packet disorder and data overflow in a cycle can be reduced or even avoided, and an end-to-end deterministic latency and jitter can be ensured as much as possible.

For ease of understanding, the following describes applications of this embodiment of this application in different scenarios with reference to four specific scenarios.

Scenario 1: Dual feed and selective receiving scenario

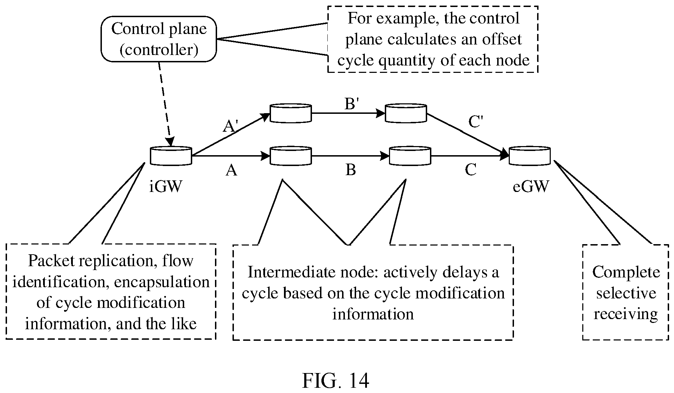

For example, FIG. 14 is a schematic diagram of a dual feed and selective receiving scenario according to an embodiment of this application.

As shown in FIG. 14, the control plane plans two paths for a flow. For example, the two paths are respectively iGW -> A -> B -> C -> eGW and iGW -> A' -> B' -> C' -> eGW. The two paths have different nodes other than iGW and eGW. The node iGW may perform a series of processing such as packet replication and flow identification. In some cases, the node iGW may further encapsulate cycle modification information. The node eGW may perform selective receiving.

Considering a latency difference between the two paths, the control plane may calculate cycle modification information on each node with reference to a buffer (buffer) capability of each node, and deliver the cycle modification information to iGW, so that the latency difference between the paths may be distributed on each node on the paths, to compensate for the latency difference between the two paths. An intermediate node may actively delay a cycle based on the cycle modification information.

In a possible implementation, Manner 1 may be used. For example, the SID of SRv6 is reused or SR-MPLS is extended, and hop-by-hop cycle modification information of a packet is encapsulated into a corresponding packet header. A subsequent node (for example, the node A, the node B, the node C, the node A', the node B', or the node C') calculates a target cycle of the packet based on a cycle label carried in the packet, a cycle mapping relationship between adjacent nodes, and carried cycle modification information. For details, refer to the descriptions in Manner 1. Details are not described herein again.

In another possible implementation, Manner 2 may be used. For example, the control plane may send cycle modification information (for example, a calculated offset cycle quantity on each node) of each node to each node (for example, the node A, the node B, the node C, the node A', the node B', and the node C'). After receiving a packet, each node may calculate a target cycle of the packet based on cycle modification information, a cycle mapping relationship between adjacent nodes, and a cycle label carried in the packet. For details, refer to the descriptions in Manner 2. Details are not described herein again.

In Scenario 1, the packet forwarding method provided in this embodiment of this application is applied to the dual feed and selective receiving scenario, so that active delaying is implemented on a forwarding node, to compensate for the latency difference between two paths, reduce a latency difference between dual feed and selective receiving paths, and ensure feasibility of performing dual feed and selective receiving based on a small buffer. In addition, because the cycle modification information is considered, packet disorder and data overflow in a cycle can be reduced or even avoided, and an end-to-end deterministic latency and jitter can be ensured as much as possible.

Scenario 2: Cycle reuse scenario of the DIP

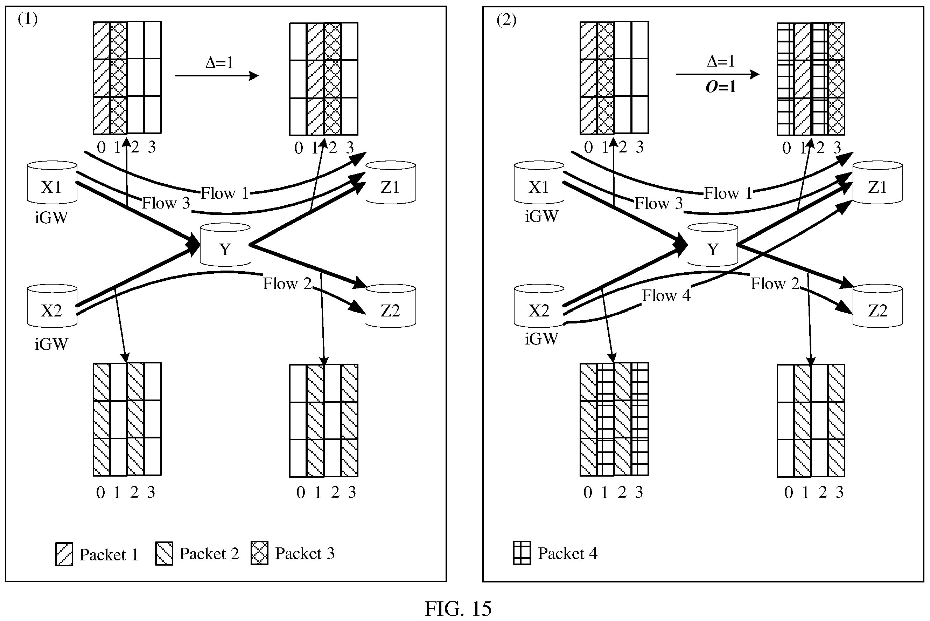

For example, FIG. 15 is a schematic diagram of a cycle reuse scenario of a DIP according to an embodiment of this application.

As shown in FIG. 15, it is assumed that there are four flows, respectively denoted as a flow 1, a flow 2, a flow 3, and a flow 4. For distinguishing, a packet corresponding to the flow 1 is denoted as a packet 1, a packet corresponding to the flow 2 is denoted as a packet 2, a packet corresponding to the flow 3 is denoted as a packet 3, and a packet corresponding to the flow 4 is denoted as a packet 4. It is assumed that three packets 1 of the flow 1 arrive every four cycles, and a path is X1 -> Y -> Z1; three packets 2 of the flow 2 arrive every two cycles, and a path is X2 -> Y -> Z2; three packets 3 of the flow 3 arrive every four cycles, and a path is X1 -> Y -> Z1; and three packets 4 of the flow 4 arrive every two cycles, and a path is X2 -> Y -> Z1.

As shown in FIG. 15(1), three packets of the flow 4 arrive every two cycles. If the flow 4 occupies a cycle T0 of a node Y, and a method in FIG. 15(1) is used (that is, a target cycle is determined based on only a cycle mapping relationship), three packets that arrive next time are to occupy a cycle T2 of the node Y However, the cycle T2 of the node Y is occupied by the flow 3. Therefore, when the method shown in FIG. 15(1) is used, packet disorder and data overflow in a cycle may occur.

As shown in FIG. 15(2), if the method in FIG. 15(2), that is, the method provided in this embodiment of this application (that is, a target cycle is determined based on a cycle mapping relationship and cycle modification information) is used, the flow 3 may be actively delayed by one cycle, that is, occupy the cycle T3 of the node Y. In this way, it can be ensured that the flow 1, the flow 3, the flow 4, and the flow 2 all access the network, to improve a cycle reuse capability of the DIP.

It should be understood that, in Scenario 2, that cycle modification information is considered for the flow 3 is only described as an example. This is not limited. In actual communication, one or more flows may be processed in the manner in this embodiment of this application based on an actual requirement.

In Scenario 2, the packet forwarding method provided in this embodiment of this application is applied to the cycle reuse scenario of the DIP, so that active delaying is achieved on a forwarding node, to improve the cycle reuse capability of the DIP.

Scenario 3: E2E zero jitter scenario

In some scenarios such as industrial Ethernet and financial transaction that require a very low jitter, in a segment from an outbound interface of the network ingress node (for example, iGW in the foregoing embodiment) to an outbound interface of the network egress node (for example, eGW in the foregoing embodiment), a very low jitter or even zero jitter needs to be ensured (that is, an accurate time of arrival is required), to meet an end-to-end jitter requirement. The following mainly provides descriptions by using zero jitter as an example.

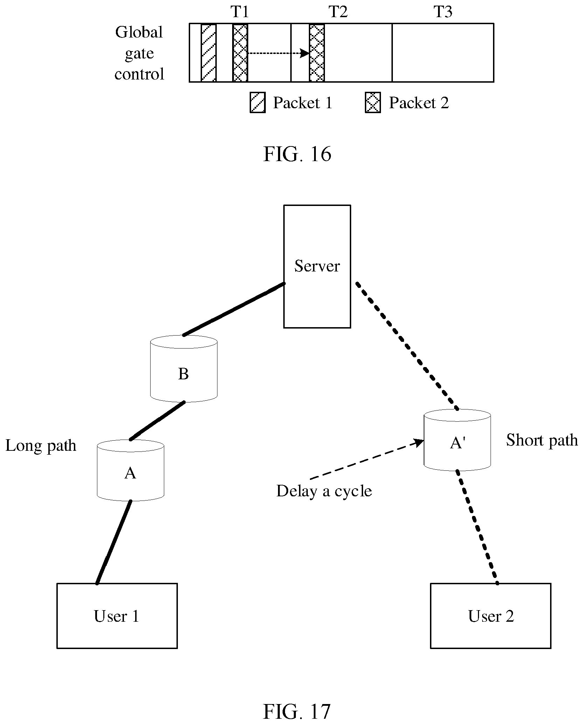

For example, FIG. 16 is a schematic diagram of an E2E zero jitter scenario according to an embodiment of this application.

As shown in FIG. 16, if there are two zero jitter packets in the cycle T1 of eGW, for example, denoted as a packet 1 and a packet 2, the two packets have a same high priority, and a sequence of the two packets cannot be ensured. Consequently, it cannot be ensured that the two packets have zero jitter. According to the method provided in this embodiment of this application, for example, an active wait operation is performed on the packet 2 along a path (that is, delaying processing is performed based on cycle modification information). For example, the packet 2 is sent in a cycle T2 of eGW, and the cycle T2 is staggered from a cycle of the packet 1. In this way, it can be ensured that the packet 1 and the packet 2 have E2E zero jitter.

It should be understood that, FIG. 6 shows only a case in which the packet 2 is delayed from the cycle T1 to the cycle T2. The packet 1 may be sent in a target cycle corresponding to the packet 1 based on an actual cycle mapping relationship.

In Scenario 3, the packet forwarding method provided in this embodiment of this application is applied to the E2E zero jitter scenario, so that active delaying is achieved on a forwarding node, to improve a zero jitter flow access capability. In some cases, an E2E jitter can be reduced from a level of ms to a level of $\mu$s (for example, 50 $\mu$s), and an accessible bandwidth may be increased by at least 20 times.

Scenario 4: Single-flow latency compensation scenario

For example, FIG. 17 is a schematic diagram of a single-flow latency compensation scenario according to an embodiment of this application.

For some services such as games in which users need to cooperate online, different network latency of different users may affect user experience. Therefore, a latency difference between paths corresponding to the different users cannot be too large. According to the method in this embodiment of this application, for example, active delaying may be performed on a node on a path with a short latency.

As shown in FIG. 17, it is assumed that a user 1 and a user 2 play a game through online cooperation. A path corresponding to the user 1 is a long path (that is, a path with a long transmission time period): server -> node A -> node B -> user 1, and a path corresponding to the user 2 is a short path (that is, a path with a short transmission time period): server -> node A' -> user 2. In consideration of user experience, and the like, a latency difference between the long path corresponding to the user 1 and the short path corresponding to the user 2 cannot be too large. In a possible implementation, active delaying may be performed on the node A' on the short path corresponding to the user 2, to ensure that a latency difference between different users falls within a specific range, and improve user experience of a service.

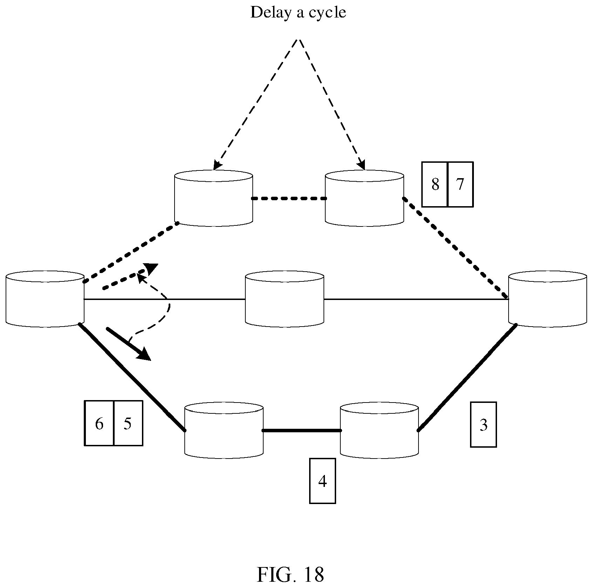

For example, FIG. 18 is a schematic diagram of a single-flow latency compensation scenario according to another embodiment of this application.

In some scenarios, for example, a load sharing path switching scenario (for example, a scenario in which a packet is transmitted through a primary path and a secondary path in a cooperative manner), a latency difference between a plurality of paths used for load sharing cannot be too large. If the latency difference between the plurality of paths is large, packet disorder may occur. According to the method in this embodiment of this application, for example, active delaying may be performed on a node on a path with a short latency.

As shown in FIG. 18, it is assumed that packets 3, 4, 5, 6, 7, and 8 are transmitted through two paths, a path for transmitting packets 3, 4, 5, and 6 is a long path (that is, a path with a long transmission time period), and a path for transmitting packets 7 and 8 is a short path (that is, a path with a short transmission time period). If the latency difference between the long path and the short path is large, the packets 7 and 8 may arrive earlier than other packets. In a possible implementation, active delaying may be performed on one or more nodes on the short path, to ensure that a latency of a path used after switching is not shortened, and avoid disorder.

In Scenario 4, the packet forwarding method provided in this embodiment of this application is applied to the single-flow latency compensation scenario, so that active delaying is achieved on a forwarding node, to improve service experience.

The foregoing describes the method provided in this embodiment of this application in detail with reference to FIG. 6 to FIG. 18.

It should be understood that, in some of the foregoing embodiments, example descriptions are mainly provided by using a latency as an example. This is not limited. Any solution of adjusting, based on an actual situation, an actual sending cycle based on a forwarding cycle determined based on a fixed cycle mapping relationship is applicable to this embodiment of this application.

It should be further understood that, in some of the foregoing embodiments, example descriptions are mainly provided by using a cycle as an example, and a time domain unit (or may be referred to as a time unit) corresponding to the cycle is not limited. For example, the time domain unit corresponding to the cycle may be one symbol or several symbols, or one mini-slot (mini-slot), or one slot (slot), or one subframe (subframe).

It should be further understood that, in some of the foregoing embodiments, example descriptions are mainly provided by using a packet as an example. This is not limited. Each packet or each flow may be processed in the manner in this embodiment of this application. In addition, different packets or different flows passing through a same node may correspond to same or different cycle modification information, and may be specifically determined based on an actual situation.

It should be further understood that, the packet forwarding manner provided in this embodiment of this application may coexist with an existing packet forwarding manner (the manner shown in FIG. 5), or may include an existing packet forwarding manner. For example, the packet forwarding manner provided in this embodiment of this application coexists with the existing packet forwarding manner. For example, in some scenarios, for example, the four scenarios, the packet forwarding manner provided in this embodiment of this application may be used. For another example, in another common scenario, when a packet forwarding cycle does not need to be adjusted, packet forwarding may be performed in the manner in FIG. 5. In other words, the packet forwarding cycle is determined based on a cycle mapping relationship. For another example, the packet forwarding manner provided in this embodiment of this application includes the existing packet forwarding manner. For example, the packet forwarding manner provided in this embodiment of this application may be used in all scenarios. In some scenarios, the offset cycle quantity O is 0; and in some scenarios (for example, the four scenarios), the offset cycle quantity O is greater than 0.

Embodiments described in this specification may be independent solutions, or may be combined based on internal logic. All these solutions fall within the protection scope of this application.

It can be understood that, in the method embodiments, a method and an operation implemented by a communication device (for example, the first device or the target device) may alternatively be implemented by a component (for example, a chip or a circuit) that may be used in the communication device.

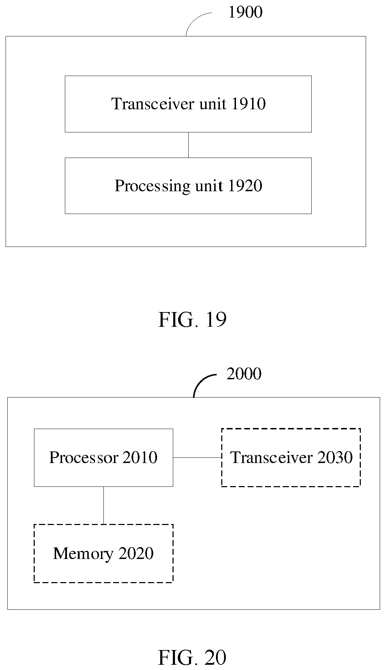

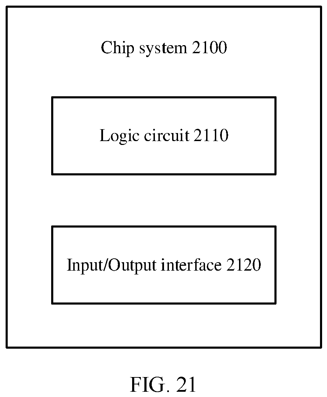

The following describes in detail a packet forwarding apparatus provided in embodiments of this application with reference to FIG. 19 to FIG. 21. It should be understood that, descriptions of apparatus embodiments correspond to the descriptions of the method embodiments. Therefore, for content that is not described in detail, refer to the foregoing method embodiments. For brevity, details are not described herein again.

FIG. 19 is a schematic block diagram of a packet forwarding apparatus according to an embodiment of this application. The apparatus 1500 includes a transceiver unit 1910 and a processing unit 1920. The transceiver unit 1910 may implement a corresponding communication function, and the processing unit 1920 is configured to process data. The transceiver unit 1910 may also be referred to as a communication interface or a communication unit.

Optionally, the apparatus 1900 may further include a storage unit. The storage unit may be configured to store instructions and/or data. The processing unit 1920 may read the instructions and/or data in the storage unit, so that the apparatus implements the method embodiments.

The apparatus 1900 may be configured to perform an action performed by a node in the method embodiments. In this case, the apparatus 1900 may be a node or a component that may be configured for the node. The transceiver unit 1910 is configured to perform a receiving and sending-related operation on a node side in the method embodiments. The processing unit 1920 is configured to perform a processing-related operation on the node side in the method embodiments.

In a design, the apparatus 1900 is configured to perform an action performed by a forwarding node (or an intermediate node, that is, an example of a first device) in the method embodiments.

In a possible implementation, the transceiver unit 1910 is configured to receive a first packet from a second device. The processing unit 1920 is configured to determine a target cycle corresponding to the first packet based on cycle modification information corresponding to the first packet and a cycle mapping relationship. The cycle mapping relationship includes a mapping relationship between a first cycle and a second cycle, the first cycle represents a forwarding cycle determined based on the cycle mapping relationship, and the second cycle represents a cycle in which the second device sends the first packet. The transceiver unit 1910 is further configured to forward the first packet in the target cycle corresponding to the first packet.

For example, the transceiver unit 1910 is further configured to: receive a second packet from the second device, where the second packet carries the second cycle, and the second cycle further indicates a cycle in which the second device sends the second packet; and forward the second packet in a target cycle corresponding to the second packet, where the target cycle corresponding to the second packet is different from the target cycle corresponding to the first packet.

For another example, the first packet received by the apparatus 1900 from the second device carries the second cycle, or carries the second cycle and cycle modification information corresponding to the first packet.

For another example, the cycle modification information corresponding to the first packet includes an offset cycle quantity corresponding to the first packet, and the offset cycle quantity corresponding to the first packet is a quantity of cycles by which the target cycle corresponding to the first packet is offset relative to the first cycle.

For another example, the target cycle corresponding to the first packet is after the first cycle.

For another example, the target cycle corresponding to the first packet is determined according to the following formula: $Y=X+\Delta+O$, where Y represents the target cycle corresponding to the first packet, X represents the second cycle, $\Delta$ represents a constant related to the cycle mapping relationship, and O represents an offset cycle difference corresponding to the first packet.

For another example, the cycle modification information corresponding to the first packet is determined based on one or more pieces of the following information: a latency difference between a plurality of paths used to transmit the first packet, a preset range that needs to be satisfied by the latency difference between the plurality of paths used to transmit the first packet, an available resource on the plurality of paths, and a resource available for the first packet in the first cycle.

For another example, the apparatus 1900 locally reads the cycle modification information corresponding to the first packet.

For another example, there is a correspondence between one or more flows and cycle modification information, and the one or more flows include a flow in which the first packet is located; or there is a correspondence between each device on the plurality of paths used to transmit the first packet and cycle modification information.

For another example, the transceiver unit 1910 is further configured to receive the cycle modification information corresponding to the first packet.

For another example, the cycle modification information corresponding to the first packet includes: cycle modification information corresponding to the first packet on the apparatus 1900, or cycle modification information corresponding to the first packet on the apparatus 1900 and one or more downstream devices of the apparatus 1900; and the processing unit 1920 is specifically configured to determine the target cycle corresponding to the first packet based on the cycle modification information corresponding to the first packet on the apparatus 1900 and the cycle mapping relationship.

The apparatus 1900 may implement steps or procedures performed by a corresponding forwarding node (or an intermediate node) in the method embodiments in embodiments of this application. The apparatus 1900 may include units configured to perform the method performed by a forwarding node (or an intermediate node) in FIG. 6 to FIG. 18. In addition, the units in the apparatus 1900 and the other operations and/or functions are respectively used to implement corresponding procedures in the method embodiments of the forwarding node (or the intermediate node) in FIG. 6 to FIG. 18.

When the apparatus 1900 is configured to perform the method 600 in FIG. 6, the transceiver unit 1910 may be configured to perform step 610 and step 630 in the method 600. The processing unit 1920 may be configured to perform a processing step in the method 600, for example, step 620.

It should be understood that, a specific process in which the units perform the foregoing corresponding steps is described in detail in the method embodiments. For brevity, details are not described herein again.

In another design, the apparatus 1900 is configured to perform an action performed by the target device (for example, a network ingress node or a control plane node) in the method embodiments.

In a possible implementation, the processing unit 1920 is configured to determine cycle modification information corresponding to a first packet. The cycle modification information corresponding to the first packet is used to determine a target cycle corresponding to the first packet together with a cycle mapping relationship, where the target cycle corresponding to the first packet is a cycle in which a first device forwards the first packet, the cycle mapping relationship represents a mapping relationship between a first cycle and a second cycle, the second cycle represents a cycle in which a second device sends the first packet to the first device, and the first cycle represents a forwarding cycle determined based on the cycle mapping relationship. The transceiver unit 1910 is configured to send the cycle modification information corresponding to the first packet.

For example, the processing unit 1920 is further configured to determine cycle modification information corresponding to a second packet. The cycle modification information corresponding to the second packet is different from the cycle modification information corresponding to the first packet, and both the second packet and the first packet are packets sent by the second device to the first device in the second cycle.

For another example, the cycle modification information corresponding to the first packet includes an offset cycle quantity corresponding to the first packet, and the offset cycle quantity corresponding to the first packet is a quantity of cycles by which the target cycle corresponding to the first packet is offset relative to the first cycle.

For another example, the target cycle corresponding to the first packet is after the first cycle.

For another example, the processing unit 1920 is specifically configured to calculate the cycle modification information corresponding to the first packet based on one or more pieces of the following information: a latency difference between a plurality of paths used to transmit the first packet, a preset range that needs to be satisfied by the latency difference between the plurality of paths used to transmit the first packet, an available resource on the plurality of paths, and a resource available for the first packet in the first cycle.

For another example, the apparatus 1900 is the second device, and the transceiver unit 1910 is further configured to send the first packet to the first device. The first packet carries the second cycle, or the first packet carries the second cycle and the cycle modification information corresponding to the first packet.

For another example, the cycle modification information corresponding to the first packet includes: cycle modification information corresponding to the first packet on the first device, or cycle modification information corresponding to the first packet on the first device and one or more downstream devices of the first device.

For another example, the transceiver unit 1910 is specifically configured to send the cycle modification information corresponding to the first packet to the first device.

The apparatus 1900 may implement steps or procedures performed by a corresponding target device (for example, a network ingress node or a control plane node) in the method embodiments in embodiments of this application. The apparatus 1900 may include units configured to perform the method performed by a target device (for example, a network ingress node or a control plane node) in FIG. 6 to FIG. 18. In addition, the units in the apparatus 1900 and the other operations and/or functions are respectively used to implement corresponding procedures in the method embodiments of the target device (for example, a network ingress node or a control plane node) in FIG. 6 to FIG. 18.

It should be understood that, a specific process in which the units perform the foregoing corresponding steps is described in detail in the method embodiments. For brevity, details are not described herein again.

The processing unit 1920 in the foregoing embodiments may be implemented by at least one processor or a processor-related circuit. The transceiver unit 1910 may be implemented by a transceiver or a transceiver-related circuit. The storage unit may be implemented by at least one memory.

As shown in FIG. 20, an embodiment of this application further provides a packet forwarding apparatus 2000. The apparatus 2000 includes a processor 2010. The processor 2010 is coupled to a memory 2020. The memory 2020 is configured to store a computer program or instructions and/or data. The processor 2010 is configured to execute the computer program or the instructions and/or the data stored in the memory 2020, so that the method in the method embodiments is performed.

Optionally, the apparatus 2000 includes one or more processors 2010.

Optionally, as shown in FIG. 20, the apparatus 2000 may further include the memory 2020.

Optionally, the apparatus 2000 may include one or more memories 2020.

Optionally, the memory 2020 may be integrated with the processor 2010, or separately disposed.

Optionally, as shown in FIG. 20, the apparatus 2000 may further include a transceiver 2030. The transceiver 2030 is configured to receive and/or send a signal. For example, the processor 2010 is configured to control the transceiver 2030 to receive and/or send a signal.

In a solution, the apparatus 2000 is configured to implement an operation performed by a node in the method embodiments.

For example, the processor 2010 is configured to implement a processing-related operation performed by a forwarding node (or an intermediate node) in the method embodiments, and the transceiver 2030 is configured to implement a receiving and sending-related operation performed by a forwarding node (or an intermediate node) in the method embodiments.

For another example, the processor 2010 is configured to implement a processing-related operation performed by a target device (for example, a network ingress node or a control plane node) in the method embodiments, and the transceiver 2030 is configured to implement a receiving and sending-related operation performed by a target device (for example, a network ingress node or a control plane node) in the method embodiments.

An embodiment of this application further provides a chip system 2100. The chip system 2100 (or may be referred to as a processing system) includes a logic circuit 2110 and an input/output interface (input/output interface) 2120. The logic circuit is configured to: be coupled to an input interface, and transmit a data parameter through the input/output interface, to perform the method in the method embodiments. A device or a node on which the chip system 2100 is installed may implement the method and functions in embodiments of this application. For example, the logic circuit 2110 may be a processing circuit in the chip system 2100, to control the device on which the chip system 2100 is installed, or may be coupled to a storage unit, and invoke instructions in the storage unit, so that the device can implement the method and functions in embodiments of this application. The input/output interface 2120 may be an input/output circuit in the chip system 2100, to output information processed by the chip system 2100, or input to-be-processed data or signaling information to the chip system 2100 for processing.

In a solution, the chip system 2100 is configured to implement an operation performed by a forwarding node (or an intermediate node) in the method embodiments.

For example, the logic circuit 2110 is configured to implement a processing-related operation performed by a forwarding node (or an intermediate node) in the method embodiments, and the input/output interface 2120 is configured to implement a receiving and sending-related operation performed by a forwarding node (or an intermediate node) in the method embodiments.

In another solution, the chip system 2100 is configured to implement an operation performed by a target device (for example, a network ingress node or a control plane node) in the method embodiments.

For example, the logic circuit 2110 is configured to implement a processing-related operation performed by a target device (for example, a network ingress node or a control plane node) in the method embodiments, and the input/output interface 2120 is configured to implement a receiving and sending-related operation performed by a target device (for example, a network ingress node or a control plane node) in the method embodiments.

An embodiment of this application further provides a computer-readable storage medium. The computer-readable storage medium stores computer instructions used to implement a method performed by a node (for example, a target device or a forwarding node) in the method embodiments.

For example, when a computer program is executed by a computer, the computer is enabled to implement the method performed by the node (for example, the target device or the forwarding node) in the method embodiments.

An embodiment of this application further provides a computer program product including instructions. When the instructions are executed by a computer, the computer is enabled to implement a method performed by a node (for example, a target device or a forwarding node) in the method embodiments.

An embodiment of this application further provides a communication system. The communication system includes the forwarding node, or the forwarding node and the target device (for example, the network ingress node or the control plane node) in the foregoing embodiments.

For explanations and beneficial effects of related content of any one of the apparatuses provided above, refer to the corresponding method embodiments provided above. Details are not described herein again.

It should be understood that, the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that, the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, with reference to units and steps in the examples described in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that, the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to implement the solutions provided in this application.

In addition, functional units in embodiments of this application may be integrated into one unit, or each of the units may exist alone physically, or two or more units are integrated into one unit.

All or some of the foregoing embodiments may be implemented by software, hardware, firmware, or any combination thereof. When software is used for implementation, all or some of embodiments may be implemented in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, S SD)), or the like. For example, the usable medium may include but is not limited to any medium that can store program code such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet forwarding method, comprising:

   receiving, by a first device, a first packet from a second device;
   determining, by the first device, a target cycle corresponding to the first packet based on cycle modification information corresponding to the first packet and a cycle mapping relationship, wherein the cycle mapping relationship comprises a mapping relationship between a first cycle and a second cycle, the first cycle represents a forwarding cycle determined based on the cycle mapping relationship, and the second cycle represents a cycle in which the second device sends the first packet; and
   forwarding, by the first device, the first packet in the target cycle corresponding to the first packet.

2. The method according to claim 1, wherein the method further comprises:

   further receiving, by the first device, a second packet sent by the second device in the second cycle; and
   forwarding, by the first device, the second packet in a target cycle corresponding to the second packet, wherein the target cycle corresponding to the second packet is different from the target cycle corresponding to the first packet.

3. The method according to claim 1 or 2, wherein the first packet received by the first device from the second device carries the second cycle, or carries the second cycle and the cycle modification information corresponding to the first packet.

4. The method according to any one of claims 1 to 3, wherein
the cycle modification information corresponding to the first packet comprises an offset cycle quantity corresponding to the first packet, and the offset cycle quantity corresponding to the first packet is a quantity of cycles by which the target cycle corresponding to the first packet is offset relative to the first cycle.

5. The method according to claim 4, wherein the target cycle corresponding to the first packet is determined according to the following formula:

$$Y=X+\Delta+O,$$

wherein
Y represents the target cycle corresponding to the first packet, X represents the second cycle, $\Delta$ represents a constant related to the cycle mapping relationship, and O represents an offset cycle difference corresponding to the first packet.

6. The method according to any one of claims 1 to 5, wherein
the cycle modification information corresponding to the first packet is determined based on one or more pieces of the following information:
a latency difference between a plurality of paths used to transmit the first packet, a preset range that needs to be satisfied by the latency difference between the plurality of paths used to transmit the first packet, an available resource on the plurality of paths, and a resource available for the first packet in the first cycle.

7. The method according to any one of claims 1 to 6, wherein the method further comprises:
locally reading, by the first device, the cycle modification information corresponding to the first packet.

8. The method according to claim 7, wherein

there is a correspondence between one or more flows and cycle modification information, and the one or more flows comprise a flow in which the first packet is located; or
there is a correspondence between each device on the plurality of paths used to transmit the first packet and cycle modification information.

9. The method according to any one of claims 1 to 6, wherein the method further comprises:
receiving, by the first device, the cycle modification information corresponding to the first packet.

10. The method according to claim 9, wherein the cycle modification information corresponding to the first packet comprises: cycle modification information corresponding to the first packet on the first device, or cycle modification information corresponding to the first packet on the first device and one or more downstream devices of the first device; and
the determining, by the first device, a target cycle corresponding to the first packet based on cycle modification information corresponding to the first packet and a cycle mapping relationship comprises:
determining, by the first device, the target cycle corresponding to the first packet based on the cycle modification information corresponding to the first packet on the first device and the cycle mapping relationship.

11. A packet forwarding method, comprising:

obtaining, by a target device, cycle modification information corresponding to a first packet, wherein the cycle modification information corresponding to the first packet is used to determine a target cycle corresponding to the first packet together with a cycle mapping relationship, wherein
the target cycle corresponding to the first packet is a cycle in which a first device forwards the first packet, the cycle mapping relationship represents a mapping relationship between a first cycle and a second cycle, the second cycle represents a cycle in which a second device sends the first packet to the first device, and the first cycle represents a forwarding cycle determined based on the cycle mapping relationship; and
sending, by the target device, the cycle modification information corresponding to the first packet.

12. The method according to claim 11, wherein the method further comprises:
obtaining, by the target device, cycle modification information corresponding to a second packet, wherein the cycle modification information corresponding to the second packet is different from the cycle modification information corresponding to the first packet, and both the second packet and the first packet are packets sent by the second device to the first device in the second cycle.

13. The method according to claim 11 or 12, wherein the cycle modification information corresponding to the first packet comprises an offset cycle quantity corresponding to the first packet, and the offset cycle quantity corresponding to the first packet is a quantity of cycles by which the target cycle corresponding to the first packet is offset relative to the first cycle.

14. The method according to any one of claims 11 to 13, wherein the obtaining, by a target device, cycle modification information corresponding to a first packet comprises:

determining, by the target device, the cycle modification information corresponding to the first packet based on one or more pieces of the following information:

a latency difference between a plurality of paths used to transmit the first packet, a preset range that needs to be satisfied by the latency difference between the plurality of paths used to transmit the first packet, an available resource on the plurality of paths, and a resource available for the first packet in the first cycle.

15. The method according to any one of claims 11 to 14, wherein the target device is the second device, and the method further comprises:
sending, by the second device, the first packet to the first device, wherein the first packet carries the second cycle, or the first packet carries the second cycle and the cycle modification information corresponding to the first packet.

16. The method according to claim 15, wherein the cycle modification information corresponding to the first packet comprises: cycle modification information corresponding to the first packet on the first device, or cycle modification information corresponding to the first packet on the first device and one or more downstream devices of the first device.

17. The method according to any one of claims 11 to 14, wherein the target device is a control plane device, and the sending, by the target device, the cycle modification information corresponding to the first packet comprises:
sending, by the control plane device, the cycle modification information corresponding to the first packet to the first device.

18. A communication apparatus, comprising a transceiver unit and a processing unit, wherein

the transceiver unit is configured to receive a first packet from a second device;
the processing unit is configured to determine a target cycle corresponding to the first packet based on cycle modification information corresponding to the first packet and a cycle mapping relationship, wherein the cycle mapping relationship comprises a mapping relationship between a first cycle and a second cycle, the first cycle represents a forwarding cycle determined based on the cycle mapping relationship, and the second cycle represents a cycle in which the second device sends the first packet; and
the transceiver unit is further configured to forward the first packet in the target cycle corresponding to the first packet.

19. The apparatus according to claim 18, wherein the transceiver unit is further configured to:

receive a second packet sent by the second device in the second cycle; and
forward the second packet in a target cycle corresponding to the second packet, wherein the target cycle corresponding to the second packet is different from the target cycle corresponding to the first packet.

20. The apparatus according to claim 18 or 19, wherein the cycle modification information corresponding to the first packet comprises an offset cycle quantity corresponding to the first packet, and the offset cycle quantity corresponding to the first packet is a quantity of cycles by which the target cycle corresponding to the first packet is offset relative to the first cycle.

21. The apparatus according to claim 20, wherein the target cycle corresponding to the first packet is determined according to the following formula:

$$Y = X + \Delta + O,$$

wherein
Y represents the target cycle corresponding to the first packet, X represents the second cycle, $\Delta$ represents a constant related to the cycle mapping relationship, and O represents an offset cycle difference corresponding to the first packet.

22. The apparatus according to any one of claims 18 to 21, wherein
the cycle modification information corresponding to the first packet is determined based on one or more pieces of the following information:
a latency difference between a plurality of paths used to transmit the first packet, a preset range that needs to be satisfied by the latency difference between the plurality of paths used to transmit the first packet, an available resource on the plurality of paths, and a resource available for the first packet in the first cycle.

23. The apparatus according to any one of claims 18 to 22, wherein
the processing unit is further configured to locally read the cycle modification information corresponding to the first packet.

24. The apparatus according to claim 23, wherein

there is a correspondence between one or more flows and cycle modification information, and the one or more flows comprise a flow in which the first packet is located; or
there is a correspondence between each device on the plurality of paths used to transmit the first packet and cycle modification information.

25. The apparatus according to any one of claims 18 to 22, wherein
the transceiver unit is further configured to receive the cycle modification information corresponding to the first packet.

26. The apparatus according to claim 25, wherein the cycle modification information corresponding to the first packet comprises: cycle modification information corresponding to the first packet on the first device, or cycle modification information corresponding to the first packet on the first device and one or more downstream devices of the first device; and
the processing unit is specifically configured to determine the target cycle corresponding to the first packet based on the cycle modification information corresponding to the first packet on the first device and the cycle mapping relationship.

27. A communication apparatus, comprising a transceiver unit and a processing unit, wherein

the processing unit is configured to obtain cycle modification information corresponding to a first packet, wherein the cycle modification information corresponding to the first packet is used to determine a target cycle corresponding to the first packet together with a cycle mapping relationship, wherein
the target cycle corresponding to the first packet is a cycle in which a first device forwards the first packet, the cycle mapping relationship represents a mapping relationship between a first cycle and a second cycle, the second cycle represents a cycle in which a second device sends the first packet to the first device, and the first cycle represents a forwarding cycle determined based on the cycle mapping relationship; and
the transceiver unit is configured to send the cycle modification information corresponding to the first packet.

28. The apparatus according to claim 27, wherein the processing unit is further configured to:
obtain cycle modification information corresponding to a second packet, wherein the cycle modification information corresponding to the second packet is different from the cycle modification information corresponding to the first packet, and both the second packet and the first packet are packets sent by the second device to the first device in the second cycle.

29. The apparatus according to claim 27 or 28, wherein the cycle modification information corresponding to the first packet comprises an offset cycle quantity corresponding to the first packet, and the offset cycle quantity corresponding to the first packet is a quantity of cycles by which the target cycle corresponding to the first packet is offset relative to the first cycle.

30. The apparatus according to any one of claims 27 to 29, wherein the processing unit is specifically configured to determine the cycle modification information corresponding to the first packet based on one or more pieces of the following information:
a latency difference between a plurality of paths used to transmit the first packet, a preset range that needs to be satisfied by the latency difference between the plurality of paths used to transmit the first packet, an available resource on the plurality of paths, and a resource available for the first packet in the first cycle.

31. The apparatus according to any one of claims 27 to 30, wherein the apparatus is the second device, and the transceiver unit is further configured to send the first packet to the first device, wherein the first packet carries the second cycle, or the first packet carries the second cycle and the cycle modification information corresponding to the first packet.

32. The apparatus according to claim 31, wherein the cycle modification information corresponding to the first packet comprises: cycle modification information corresponding to the first packet on the first device, or cycle modification information corresponding to the first packet on the first device and one or more downstream devices of the first device.

33. The apparatus according to any one of claims 27 to 32, wherein the apparatus is a control plane device, and the transceiver unit is specifically configured to send the cycle modification information corresponding to the first packet to the first device.

34. A communication apparatus, comprising a processor, wherein the processor is configured to: be coupled to a memory, and read and execute instructions and/or program code stored in the memory, to perform the method according to any one of claims 1 to 17.

35. The apparatus according to claim 34, wherein the apparatus further comprises the memory.

36. The apparatus according to claim 34 or 35, wherein the apparatus further comprises a communication interface, and the communication interface is coupled to the processor; and
the communication interface is configured to input and/or output information.

37. The apparatus according to any one of claims 34 to 36, wherein the apparatus is a chip.

**38.** A chip system, comprising a logic circuit, wherein the logic circuit is configured to: be coupled to an input/output interface, and transmit data through the input/output interface, to perform the method according to any one of claims 1 to 17.

**39.** A computer-readable storage medium, wherein the computer-readable storage medium stores program code, and when the computer program code is run on a computer, the computer is enabled to perform the method according to any one of claims 1 to 17.

**40.** A computer program product, wherein the computer program product comprises a computer program, and when the computer program is run on a computer, the computer is enabled to perform the method according to any one of claims 1 to 17.

FIG. 1

FIG. 2

FIG. 3

FIG. 4

FIG. 5

600

| First device | | Second device |

610: First packet

620: Determine a target cycle corresponding to the first packet based on cycle modification information corresponding to the first packet and a cycle mapping relationship, where the cycle mapping relationship includes a mapping relationship between a first cycle and a second cycle, the first cycle represents a forwarding cycle determined based on the cycle mapping relationship, and the second cycle represents a cycle in which the second device sends the first packet

630: Forward the first packet in the target cycle corresponding to the first packet

FIG. 6

| IPv6 header |
|:---:|
| SRH |
| SID 1 |
| ... |
| SID n |
| |
| Payload data |

SRv6 data plane

FIG. 7

SID

| Locator (locator) | Function (function) | Arguments (arguments) |
|:---:|:---:|:---:|

Offset cycle quantity

FIG. 8

Offset cycle quantity $O_1=10$                    Offset cycle quantity $O_2=11$

$\Delta_1=3$                    $\Delta_2=2$

| T0 | T1 | T2 | T3 | | T3 | T13 | T14 | T15 | | T15 | T26 | T27 | T28 |

T

iGW                    R1                    R2

| IPv6 DA=R1::10 |
| SRH (SL=H−1)<br><..., R2::11, R1::10> |
| Payload (payload) |

| IPv6 DA=R2::11 |
| SRH (SL=H−2)<br><..., R2::11, R1::10> |
| payload |

| IPv6 DA=... |
| SRH (SL=...)<br><..., R2::11, R1::10> |
| payload |

FIG. 9

EP 4 329 262 A1

| Label (Tag 1) |
| Tag 2 |
| ... |
| Tag n |
| IPv4 or IPv6 header |
| Payload data |

SR-MPLS data plane

FIG. 10

Label (label) | 15 bits | 5 bits |

Offset cycle quantity

FIG. 11

FIG. 12

FIG. 13

Control plane
(controller)

For example, the control
plane calculates an offset
cycle quantity of each node

B'

A'

C'

B

A

C

iGW

eGW

Packet replication, flow
identification, encapsulation
of cycle modification
information, and the like

Intermediate node: actively delays a
cycle based on the cycle modification
information

Complete
selective
receiving

FIG. 14

FIG. 15

FIG. 16

FIG. 17

Delay a cycle

FIG. 18

1900

Transceiver unit 1910

Processing unit 1920

FIG. 19

2000

Processor 2010 — Transceiver 2030

Memory 2020

FIG. 20

Chip system 2100

Logic circuit 2110

Input/Output interface 2120

FIG. 21

## INTERNATIONAL SEARCH REPORT

| International application No. |
| --- |
| **PCT/CN2022/085875** |

| | |
| --- | --- |
| **A.** | **CLASSIFICATION OF SUBJECT MATTER** |

H04L 47/56(2022.01)i

According to International Patent Classification (IPC) or to both national classification and IPC

| | |
| --- | --- |
| **B.** | **FIELDS SEARCHED** |

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, WPI, EPODOC, CNKI: 调整, 修正, 改变, 偏移, 更新, 周期, 时延, 延时, 延迟, 映射, 匹配, 确定性, adjust+, revis+, change, offset, update, period, latency, delay, map+, match+, deterministic, DIP, LDN

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 112311494 A (HUAWEI TECHNOLOGIES CO., LTD.) 02 February 2021 (2021-02-02) description, paragraphs [0005]-[0198] | 1-40 |
| A | CN 110545241 A (HUAWEI TECHNOLOGIES CO., LTD.) 06 December 2019 (2019-12-06) entire document | 1-40 |
| A | US 2017070439 A1 (FTS COMPUTERTECHNIK GMBH) 09 March 2017 (2017-03-09) entire document | 1-40 |
| A | WO 2021036915 A1 (HUAWEI TECHNOLOGIES CO., LTD.) 04 March 2021 (2021-03-04) entire document | 1-40 |

☐ Further documents are listed in the continuation of Box C.  ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **18 June 2022** | **28 June 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/085875**

| Patent document cited in search report | | | Publication date (day/month/year) | Patent family member(s) | | | Publication date (day/month/year) |
|---|---|---|---|---|---|---|---|
| CN | 112311494 | A | 02 February 2021 | WO | 2021013109 | A1 | 28 January 2021 |
| CN | 110545241 | A | 06 December 2019 | US | 2021083970 | A1 | 18 March 2021 |
| | | | | WO | 2019228318 | A1 | 05 December 2019 |
| | | | | EP | 3817307 | A1 | 05 May 2021 |
| US | 2017070439 | A1 | 09 March 2017 | EP | 3139547 | A1 | 08 March 2017 |
| WO | 2021036915 | A1 | 04 March 2021 | CN | 112448896 | A | 05 March 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110528002